(19) 

Europäisches
Patentamt

European
Patent Office

Office européen
des brevets

(11) **EP 4 761 152 A1**

(12) **EUROPEAN PATENT APPLICATION**
published in accordance with Art. 153(4) EPC

(43) Date of publication:
**17.06.2026 Bulletin 2026/25**

(51) International Patent Classification (IPC):
***H04L 1/00*** *(2006.01)*

(21) Application number: **24861754.0**

(22) Date of filing: **06.08.2024**

(52) Cooperative Patent Classification (CPC):
**H04L 1/00**

(86) International application number:
**PCT/CN2024/110153**

(87) International publication number:
**WO 2025/050909 (13.03.2025 Gazette 2025/11)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **05.09.2023 CN 202311141500**

(71) Applicant: **HUAWEI TECHNOLOGIES CO., LTD.
Shenzhen 518129 (CN)**

(72) Inventors:
- **RUAN, Wei**
  **Shenzhen, Guangdong 518129 (CN)**
- **MA, Yunsi**
  **Shenzhen, Guangdong 518129 (CN)**
- **HE, Shiyue**
  **Shenzhen, Guangdong 518129 (CN)**

(74) Representative: **Körber, Martin Hans
Mitscherlich PartmbB
Karlstraße 7
80333 München (DE)**

(54) **COMMUNICATION METHOD AND APPARATUS**

(57) A communication method and apparatus are provided, to improve MCS selection efficiency. The method includes: A first device generates first signaling, where the first signaling includes information about an MCS pattern and information about a target MCS, the MCS pattern corresponds to a plurality of candidate MCSs, the target MCS is determined from the plurality of candidate MCSs, and the target MCS includes a modulation scheme corresponding to each of a plurality of spatial streams between the first device and a second device; and the first device sends the first signaling to the second device. During MCS selection, the first device may select an MCS from the plurality of candidate MCSs corresponding to the MCS pattern. Because a number of the plurality of candidate MCSs corresponding to the MCS pattern is limited, MCS selection efficiency of the first device can be improved.

FIG. 4

**Description**

CROSS-REFERENCE TO RELATED APPLICATIONS

This application claims priority to Chinese Patent Application No. 202311141500.2, filed with the China National Intellectual Property Administration on September 5, 2023 and entitled "COMMUNICATION METHOD AND APPARATUS", which is incorporated herein by reference in its entirety.

TECHNICAL FIELD

This application relates to the field of wireless communication technologies, and in particular, to a communication method and apparatus.

BACKGROUND

Data traffic rapidly grows with development of the mobile Internet and popularization of smart terminals. A wireless local area network (wireless local area network, WLAN) becomes one of the mainstream mobile broadband access technologies by virtue of advantages such as a high rate and low costs.

To improve service transmission reliability of a WLAN system, unequal modulation (unequal modulation, UEQM) may be used in the WLAN system, to support different modulation schemes for different spatial streams. When a communication frame is transmitted between network nodes in the WLAN system, a network node at a transmit end needs to configure, for a network node at a receive end, a modulation and coding scheme (modulation and coding scheme, MCS) used for a plurality of spatial streams. Currently, during MCS selection, the network node usually selects, from a preconfigured MCS table, the MCS used for the plurality of spatial streams. However, as modulation schemes and a number of spatial streams that are supported by the WLAN system increase, a number of MCSs included in the MCS table also increases sharply. When the network node selects the MCS from the MCS table that includes a large number of MCSs, a problem of low MCS selection efficiency exists.

SUMMARY

This application provides a communication method and apparatus, to improve MCS selection efficiency.

According to a first aspect, this application provides a communication method. The method may be performed by a first device or a module (for example, a chip) in the first device. The method includes: generating first signaling, where the first signaling includes information about an MCS pattern and information about a target MCS, the MCS pattern corresponds to a plurality of candidate MCSs, the target MCS is determined from the plurality of candidate MCSs, and the target MCS includes a modulation scheme corresponding to each of a plurality of spatial streams between the first device and a second device; and sending the first signaling to the second device.

In the foregoing solution, during MCS selection, the first device may first determine the information about the MCS pattern, where the MCS pattern corresponds to the plurality of candidate MCSs. The first device may select an MCS from the plurality of candidate MCSs corresponding to the MCS pattern. Because a number of the plurality of candidate MCSs corresponding to the MCS pattern is limited, MCS selection efficiency of the first device can be improved.

In a possible implementation method, the MCS pattern indicates a constraint on the modulation scheme used for each of the plurality of spatial streams.

In the foregoing solution, the MCS pattern indicates the constraint on the modulation scheme used for each of the plurality of spatial streams. Therefore, a candidate MCS that meets the constraint may be determined based on the MCS pattern. During MCS selection, the device may perform selection on the candidate MCS that meets the constraint indicated by the MCS pattern, thereby improving MCS selection efficiency.

In a possible implementation method, the constraint includes at least one of the following:

order differences corresponding to modulation schemes used for different spatial streams in the plurality of spatial streams; and

a difference between coded bits of modulation schemes used for different spatial streams in the plurality of spatial streams.

In the foregoing solution, the constraint indicated by the MCS pattern is appropriately set, and the candidate MCS that meets the constraint can be accurately determined based on the MCS pattern.

In a possible implementation method, the MCS pattern includes a plurality of elements, each element corresponds to one of the plurality of spatial streams, and the element is determined based on a modulation scheme used for the corresponding spatial stream and a modulation scheme used for a reference spatial stream, or the element is determined based on an MCS used for the corresponding spatial stream and an MCS used for the reference spatial stream.

In the foregoing solution, each element in the MCS pattern corresponds to one spatial stream, and an element value may accurately indicate a constraint of the MCS pattern on the modulation scheme or the MCS used for each spatial stream.

In a possible implementation method, the MCS pattern is selected from an MCS pattern set, and an MCS pattern included in the MCS pattern set matches a condition of a channel between the devices.

In the foregoing solution, the MCS pattern set includes the MCS pattern that matches the condition of the channel between the devices, so that MCS patterns included in the MCS pattern set can be reduced, and correspondingly, a number of candidate MCSs can be reduced, to further improve MCS selection efficiency.

In a possible implementation method, the first device receives pattern indication information sent by the second device, where the pattern indication information indicates the MCS pattern.

In the foregoing solution, the first device may receive the pattern indication information directly indicated by the second device, so that the first device can accurately select the target MCS based on the MCS pattern indicated by the pattern indication information.

In a possible implementation method, the pattern indication information is carried in a field of an acknowledgment frame or a management frame.

In a possible implementation method, the pattern indication information includes an index or an element of the MCS pattern.

In a possible implementation method, the first device receives a channel measurement result from the second device, where the channel measurement result indicates channel quality information of a part or all of the plurality of spatial streams; and the first device determines the MCS pattern based on the channel measurement result.

In the foregoing solution, the first device may receive the channel measurement result sent by the second device, and accurately determine the MCS pattern based on the channel measurement result.

In a possible implementation method, the first device determines the MCS pattern from a plurality of candidate MCS patterns based on the channel measurement result.

In the foregoing solution, the first device may accurately determine the MCS pattern from the plurality of candidate MCS patterns based on the channel measurement result.

In a possible implementation method, the candidate MCS pattern includes a plurality of elements, each element corresponds to one of the plurality of spatial streams, and the element is determined based on a modulation scheme used for the corresponding spatial stream and the modulation scheme used for the reference spatial stream, or the element is determined based on an MCS used for the corresponding spatial stream and the MCS used for the reference spatial stream.

In a possible implementation method, the first device determines an identifier of the MCS pattern based on the channel measurement result.

In the foregoing solution, the first device may quickly determine the identifier of the MCS pattern based on the channel measurement result, for example, determine the identifier of the MCS pattern based on an AI model.

In a possible implementation method, the channel measurement result includes channel quality information of each of the plurality of spatial streams; or

the channel measurement result includes the channel quality information of the part of the plurality of spatial streams; or

the channel measurement result includes channel quality information of the reference spatial stream in the plurality of spatial streams and information about a difference between channel quality information of different spatial streams in the plurality of spatial streams.

In the foregoing solution, the first device may receive the channel measurement result flexibly fed back by the second device in a plurality of different manners.

In a possible implementation method, the first device determines, based on the channel measurement result, channel quality information corresponding to each spatial stream; and for each spatial stream, the first device determines, based on the channel quality information corresponding to the spatial stream and channel quality information corresponding to the reference spatial stream in the plurality of spatial streams, an element corresponding to the spatial stream, where the reference spatial stream is a spatial stream with a largest or smallest sequence number in the plurality of spatial streams, or a sequence number of the reference spatial stream is adjacent to a sequence number of the spatial stream; and determines the MCS pattern based on the determined element corresponding to each spatial stream.

In the foregoing solution, the first device may accurately determine each element in the MCS pattern based on the channel quality information corresponding to each spatial stream, to accurately determine a to-be-used MCS pattern.

In a possible implementation method, the first device receives the channel measurement result sent by the second device by using the acknowledgment frame or the management frame; or the first device sends a trigger (Trigger) frame including channel feedback indication information to the second device, and receives the channel measurement result sent by the second device; or the first device receives the channel measurement result sent by the second device in a sounding (sounding) phase.

In the foregoing solution, the first device may receive the channel measurement results flexibly fed back by the second device at different occasions in different manners.

In a possible implementation method, a SIG field of the first signaling includes a first field and a second field, the first field indicates the information about the MCS pattern, and the second field indicates the information about the target MCS.

In the foregoing solution, the selected target MCS is accurately indicated to the second device through a joint indication by two fields in the SIG field of the first signaling.

According to a second aspect, this application provides a communication method. The method may be performed by a second device or a module (for example, a chip) in the second device. The method includes: receiving first signaling sent by a first device, where the first signaling includes information about an MCS pattern and information about a target MCS, the MCS pattern corresponds to a plurality of candidate MCSs, the target MCS is determined from the plurality of candidate MCSs, and the target MCS includes a modulation scheme corresponding to each of a plurality of spatial streams between the first device and the second device; and decoding the first signaling based on the information about the MCS pattern and the information about the target MCS.

In a possible implementation method, the MCS pattern indicates a constraint on the modulation scheme used for each of the plurality of spatial streams.

In a possible implementation method, the constraint includes at least one of the following:

order differences corresponding to modulation schemes used for different spatial streams in the plurality of spatial streams; and

a difference between coded bits of modulation schemes used for different spatial streams in the plurality of spatial streams.

In a possible implementation method, the MCS pattern includes a plurality of elements, each element corresponds to one of the plurality of spatial streams, and the element is determined based on a modulation scheme used for the corresponding spatial stream and a modulation scheme used for a reference spatial stream, or the element is determined based on an MCS used for the corresponding spatial stream and an MCS used for the reference spatial stream.

In a possible implementation method, the MCS pattern is selected from an MCS pattern set, and an MCS pattern included in the MCS pattern set matches a condition of a channel between the devices.

In a possible implementation method, the second device determines the MCS pattern based on channel quality information corresponding to each spatial stream; and the second device sends pattern indication information to the first device, where the pattern indication information indicates the MCS pattern.

In a possible implementation method, the second device determines the MCS pattern from the plurality of MCS patterns based on the channel quality information corresponding to each spatial stream.

In a possible implementation method, the candidate MCS pattern includes a plurality of elements, each element corresponds to one of the plurality of spatial streams, and the element is determined based on a modulation scheme used for the corresponding spatial stream and the modulation scheme used for the reference spatial stream, or the element is determined based on an MCS used for the corresponding spatial stream and the MCS used for the reference spatial stream.

In a possible implementation method, the second device determines an identifier of the MCS pattern based on the channel quality information corresponding to each spatial stream.

In a possible implementation method, the pattern indication information is carried in a field of an acknowledgment frame or a management frame.

In a possible implementation method, the pattern indication information includes an index or an element of the MCS pattern.

In a possible implementation method, for each spatial stream, the second device determines, based on the channel quality information corresponding to the spatial stream and channel quality information corresponding to the reference spatial stream in the plurality of spatial streams, an element corresponding to the spatial stream, where the reference spatial stream is a spatial stream with a largest or smallest sequence number in the plurality of spatial streams, or a sequence number of the reference spatial stream is adjacent to a sequence number of the spatial stream; and determines the MCS pattern based on the determined element corresponding to each spatial stream.

In a possible implementation method, the second device sends a channel measurement result to the first device, where the channel measurement result indicates channel quality information of a part of or all of the plurality of spatial streams, and the channel measurement result is used to determine the MCS pattern.

**EP 4 761 152 A1**

In a possible implementation method, the channel measurement result includes the channel quality information of each of the plurality of spatial streams; or the channel measurement result includes the channel quality information of the part of the plurality of spatial streams; or the channel measurement result includes channel quality information of the reference spatial stream in the plurality of spatial streams and information about a difference between channel quality information of different spatial streams in the plurality of spatial streams.

In a possible implementation method, the second device sends the channel measurement result to the first device by using the acknowledgment frame or the management frame; or the second device sends the channel measurement result to the first device after receiving a trigger frame that is sent by the first device and that includes channel feedback indication information; or the second device sends the channel measurement result to the first device in a sounding (sounding) phase.

In a possible implementation method, a SIG field of the first signaling includes a first field and a second field, the first field indicates the information about the MCS pattern, and the second field indicates the information about the target MCS.

According to a third aspect, an embodiment of this application provides a communication apparatus. The apparatus may be a first device, or may be a module (for example, a chip) in the first device. The apparatus has a function of implementing any implementation method in the first aspect. The function may be implemented by hardware, or may be implemented by hardware executing corresponding software. The hardware or the software includes one or more modules corresponding to the function.

According to a fourth aspect, an embodiment of this application provides a communication apparatus. The apparatus may be a second device, or may be a module (for example, a chip) in the second device. The apparatus has a function of implementing any implementation method in the second aspect. The function may be implemented by hardware, or may be implemented by hardware executing corresponding software. The hardware or the software includes one or more modules corresponding to the function.

According to a fifth aspect, an embodiment of this application provides a communication apparatus, including a unit or means (means) configured to perform the steps of any implementation method in the first aspect, or including a unit or means (means) configured to perform the steps of any implementation method in the second aspect.

According to a sixth aspect, an embodiment of this application provides a communication apparatus, including a processor and an interface circuit. The processor is configured to: communicate with another apparatus through the interface circuit, and perform any implementation method in the first aspect, or perform any implementation method in the second aspect. There are one or more processors.

Optionally, the communication apparatus may further include a memory configured to store computer instructions. The memory is coupled to the processor, and the processor executes the computer instructions stored in the memory, so that the apparatus performs any implementation method in the first aspect, or performs any implementation method in the second aspect.

According to a seventh aspect, an embodiment of this application further provides a computer program product. The computer program product includes a computer program or instructions, and when the computer program or the instructions are run by a communication apparatus, any implementation method in the first aspect or the second aspect is performed.

According to an eighth aspect, an embodiment of this application further provides a computer-readable storage medium. The computer-readable storage medium stores instructions, and when the instructions are run on a communication apparatus, any implementation method in the first aspect and the second aspect is performed.

According to a ninth aspect, an embodiment of this application further provides a chip system, including a processor, configured to perform any implementation method in the first aspect or the second aspect.

BRIEF DESCRIPTION OF DRAWINGS

FIG. 1 is a diagram of a network architecture of a WLAN according to an embodiment of this application;
FIG. 2 is a diagram of an MCS subtable according to an embodiment of this application;
FIG. 3 is a diagram of an MCS subtable according to an embodiment of this application;
FIG. 4 is a flowchart of a communication method according to an embodiment of this application;
FIG. 5 is a diagram of a frame structure of a BA frame according to an embodiment of this application;
FIG. 6 is a diagram of a frame structure of a BA frame according to an embodiment of this application;
FIG. 7 is a diagram of a frame structure of a BA frame according to an embodiment of this application;
FIG. 8 is a diagram of a frame structure of a BA frame according to an embodiment of this application;
FIG. 9 is a diagram of a frame structure of a BA frame according to an embodiment of this application;
FIG. 10 is a diagram of a field format according to an embodiment of this application;

FIG. 11 is a diagram of a format of a CMF element according to an embodiment of this application;

FIG. 12 is a diagram of a structure of a communication apparatus according to an embodiment of this application;

FIG. 13 is a diagram of a structure of a communication apparatus according to an embodiment of this application; and

FIG. 14 is a diagram of a structure of a communication apparatus according to an embodiment of this application.

DESCRIPTION OF EMBODIMENTS

In embodiments of this application, "at least one" means one or more, and "a plurality of" means two or more than two. The term "and/or" describes an association relationship between associated objects and indicates that three relationships may exist. For example, A and/or B may indicate the following cases: Only A exists, both A and B exist, and only B exists, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, at least one item (piece) of a, b, or c may indicate a, b, c, a and b, a and c, b and c, or a, b and c, where each of a, b, c may be an element, or may be a set including one or more elements.

In this application, "for example", "in some embodiments", "in some other embodiments", and the like are used to represent giving an example, an illustration, or a description. Any embodiment or design scheme described as an "example" in this application should not be explained as being more preferred or having more advantages than another embodiment or design scheme. Exactly, use of the word "for example" is intended to present a concept in a specific manner.

"Of (of)", "corresponding (corresponding, relevant)", and "corresponding (corresponding)" in this application may be interchangeably used sometimes. It should be noted that expressed meanings are the same when differences are not emphasized. In embodiments of this application, communication and transmission may be interchangeably used sometimes. It should be noted that expressed meanings are the same when differences are not emphasized. For example, transmission may include sending and/or receiving, and may be a noun or a verb.

It should be noted that in embodiments of this application, words such as "first" and "second" are merely used for distinction and description, and cannot be understood as an indication or implication of relative importance or an indication or implication of a sequence.

Embodiments of this application are applicable to a local area network (local area network, LAN), and in particular, a WLAN, for example, a WLAN that uses any one of the institute of electrical and electronics engineers (institute of electrical and electronics engineers, IEEE) 802.11 series protocols. The WLAN may include one or more basic service sets (basic service sets, BSSs). Network nodes in the basic service set include an access point (access point, AP) and a station (station, STA).

Embodiments of this application are also applicable to a wireless local area network like an internet of things (internet of things, IoT) network or a vehicle-to-everything (vehicle to X, V2X) network. Certainly, embodiments of this application are further applicable to other possible communication systems, for example, a long term evolution (long term evolution, LTE) communication system, an LTE frequency division duplex (frequency division duplex, FDD) communication system, an LTE time division duplex (time division duplex, TDD) communication system, a universal mobile telecommunications system (universal mobile telecommunications system, UMTS), a worldwide interoperability for microwave access (worldwide interoperability for microwave access, WiMAX) communication system, a 5th generation (5th generation, 5G) communication system, and a future evolved communication system.

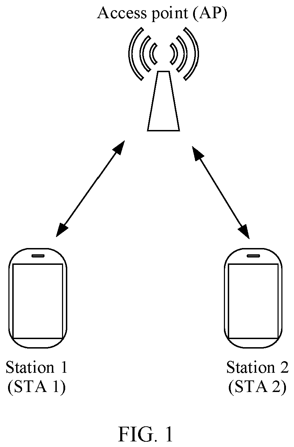

The following uses an example in which embodiments of this application are applicable to the WLAN. FIG. 1 is a diagram of a network architecture of a WLAN to which embodiments of this application are applicable. FIG. 1 uses an example in which the WLAN includes one AP and two STAs. A STA associated with the AP can receive a frame sent by the AP, and can also send a frame to the AP. Embodiments of this application are described by using communication between the AP and the STA as an example. It may be understood that embodiments of this application are also applicable to communication between APs. For example, the APs may communicate with each other through a distributed system (distributed system, DS). Embodiments of this application are also applicable to communication between STAs.

The AP may be an access point for a terminal device (for example, a mobile phone) to access a wired (or wireless) network. The AP is equivalent to a bridge that connects the wired network and the wireless network, and a main function is to connect various wireless network clients together and then connect the wireless network to the Ethernet. For example, the AP may be a terminal device (for example, a mobile phone) or a network device (for example, a router) with a Wi-Fi chip. In embodiments of this application, the AP may be a device that supports the 802.11be standard, or may be a device that supports a plurality of WLAN standards of the 802.11 series, such as 802.11ax, 802.11ay, 802.11ac, 802.11n, 802.11g, 802.11b, 802.11a, and a next generation of 802.11be.

The STA may be a wireless communication chip, a wireless sensor, a wireless communication terminal, or the like, and may also be referred to as a user. For example, the STA may be a mobile phone that supports a Wi-Fi communication function, a tablet computer that supports a Wi-Fi communication function, a set top box that supports a Wi-Fi communication function, a smart television that supports a Wi-Fi communication function, a smart wearable device that supports a Wi-Fi communication function, a vehicle-mounted communication device that supports a Wi-Fi communication function, and a computer that supports a Wi-Fi communication function. Optionally, the STA may support the 802.11be standard, or may support the plurality of WLAN standards of the 802.11 series, such as 802.11ax, 802.11ay, 802.11ac, 802.11n, 802.11g, 802.11b, 802.11a, and the next generation of 802.11be.

It may be understood that quantities of APs and STAs shown in FIG. 1 are merely examples, and may be larger or smaller.

For ease of understanding embodiments of this application, several basic concepts in embodiments of this application are briefly described.

Spatial stream (spatial stream): In a Wi-Fi technology, spatial streams are independent data streams that are simultaneously transmitted on a wireless channel by using a multiple-input multiple-output (multiple-input multiple-output, MIMO) technology. MIMO can use a plurality of antennas to implement parallel data transmission, thereby improving a capacity and performance of a wireless network. Each spatial stream may be considered as an independent channel, and can simultaneously transmit different data on a same frequency. Simultaneous using of a plurality of spatial streams can implement a higher data transmission rate and a more reliable wireless connection. A number of spatial streams depends on a number of transmit and receive antennas.

Unequal modulation: In a Wi-Fi technology, different modulation schemes may be used for a plurality of spatial streams supported between network nodes. Such a technology in which modulation schemes used for different spatial streams are not completely the same is referred to as unequal modulation.

To improve MCS selection efficiency of a network node, in this application, a plurality of MCS patterns (pattern) and candidate MCSs corresponding to each MCS pattern are determined based on a modulation scheme supported by a WLAN standard and a supported number of spatial streams (number of spatial streams, NSS).

Each number of spatial streams may correspond to a plurality of MCS patterns.

For example, a plurality of MCS patterns may be in one MCS pattern table, and each number of spatial streams may correspond to one MCS pattern table. Candidate MCSs corresponding to each MCS pattern may also be in one MCS subtable, and each MCS in the MCS subtable indicates a modulation scheme used for each of a plurality of spatial streams.

Each MCS pattern in the MCS pattern table indicates a constraint of a modulation scheme used for each of the plurality of spatial streams. A candidate MCS included in an MCS subtable corresponding to an MCS pattern needs to meet a constraint indicated by the MCS pattern.

Optionally, the MCS pattern includes a plurality of elements, and each element corresponds to one of the plurality of spatial streams. The plurality of elements included in the MCS pattern indicate the constraint of the modulation scheme used for each of the plurality of spatial streams.

The constraint indicated by the MCS pattern may include at least one of the following:

(1) order differences corresponding to modulation schemes used for different spatial streams in the plurality of spatial streams; and
(2) a difference between coded bits of modulation schemes used for different spatial streams in the plurality of spatial streams.

Optionally, when the constraint indicated by the MCS pattern includes order differences corresponding to modulation schemes used for different spatial streams in the plurality of spatial streams, the MCS pattern constrains an order difference between a modulation scheme used for each spatial stream and a modulation scheme used for a reference spatial stream.

The reference spatial stream may be a spatial stream with a largest sequence number or a smallest sequence number in the plurality of spatial streams.

During implementation, for a plurality of spatial streams between devices, the plurality of spatial streams are numbered. For example, the spatial streams may be numbered based on channel quality. For example, the plurality of spatial streams are numbered in ascending order of channel quality, or the plurality of spatial streams may be numbered in descending order of channel quality.

For example, when NSS=4, elements included in the MCS pattern are {2, 2, 1, 0}. It is assumed that 2, 2, 1, and 0 respectively correspond to a spatial stream 1, a spatial stream 2, a spatial stream 3, and a spatial stream 4, and the spatial stream 4 is the reference spatial stream. In this case, the constraint indicated by the MCS pattern is that an order difference corresponding to a modulation scheme used for the spatial stream 1 and a modulation scheme used for the spatial stream 4 is 2, an order difference corresponding to a modulation scheme used for the spatial stream 2 and the modulation scheme used for the spatial stream 4 is 2, and an order difference corresponding to a modulation scheme used for the spatial stream 3 and the modulation scheme used for the spatial stream 4 is 1.

When the constraint indicated by the MCS pattern includes a difference between coded bits of modulation schemes used for different spatial streams in the plurality of spatial streams, the MCS pattern constrains a coded bit of a modulation scheme used for each spatial stream and a coded bit of a modulation scheme used for a reference spatial stream.

For example, the following mapping relationship exists between a value of an element in the MCS pattern, a coded bit of a modulation scheme used for a corresponding spatial stream, and the coded bit of the modulation scheme used for the reference spatial stream:

$$A = \left\lceil (m - n) / 2 \right\rceil \text{ (Formula 1)}$$

A is a value of an element in the MCS pattern, m is a coded bit of a modulation scheme used for a spatial stream corresponding to the element, n is the coded bit of the modulation scheme used for the reference spatial stream, and $\lceil \rceil$ is a round-up operation.

For example, when NSS=2, elements included in the MCS pattern are {2, 0}. It is assumed that 2 and 0 respectively correspond to a spatial stream 1 and a spatial stream 2, and the spatial stream 2 is the reference spatial stream. In this case, the constraint indicated by the MCS pattern indication is that a coded bit m of a modulation scheme used for the spatial stream 1 and a coded bit n of a modulation scheme used for the spatial stream 2 meet Formula 1.

Formula 1 is merely an example of the mapping relationship between the value of the element in the MCS pattern, the coded bit of the modulation scheme used for the corresponding spatial stream, and the coded bit of the modulation scheme used for the reference spatial stream. The mapping relationship is not limited in this application.

When the MCS pattern table corresponding to each number of spatial streams is generated, MCS sets that can be used for different spatial streams are determined based on the number of spatial streams. Each MCS in the MCS set includes a modulation scheme and/or a code rate used for each of the plurality of spatial streams.

The modulation scheme used for the spatial stream may include one of the following: binary phase shift keying (binary phase shift keying, BPSK), quadrature phase shift keying (quadrature phase shift keying, QPSK), and 16-quadrature amplitude modulation (quadrature amplitude modulation, QAM), 64-QAM, 256-QAM, 1024-QAM, and 4096-QAM.

Optionally, the MCS pattern table is generated based on each MCS included in the MCS set.

For example, an element in a corresponding MCS pattern may be determined based on each MCS in the MCS set by traversing the MCS set.

In this application, the element in the MCS pattern may be determined in the following plurality of manners.

Element determining manner 1: The element in the MCS pattern may be determined based on a modulation scheme used for a corresponding spatial stream and the modulation scheme used for the reference spatial stream.

Optionally, an element corresponding to the reference spatial stream in the MCS pattern may be set to 0.

For example, the element in the MCS pattern is determined based on an order difference between the modulation scheme used for the corresponding spatial stream and the modulation scheme used for the reference spatial stream. For example, when NSS=4, it is assumed that a spatial stream 4 is the reference spatial stream, and one MCS includes a modulation scheme BPSK corresponding to the spatial stream 4, a modulation scheme QPSK corresponding to a spatial stream 3, a modulation scheme 16-QAM corresponding to a spatial stream 2, and a modulation scheme 64-QAM corresponding to a spatial stream 1. In this case, it may be determined that an element corresponding to the spatial stream 4 is 0, an element corresponding to the spatial stream 3 is 1, an element corresponding to the spatial stream 2 is 2, and an element corresponding to the spatial stream 1 is 3.

For another example, the element in the MCS pattern is determined based on a difference between a coded bit of the modulation scheme used for the corresponding spatial stream and the coded bit of the modulation scheme used for the reference spatial stream. For example, when NSS=2, it is assumed that a spatial stream 2 is the reference spatial stream, and one MCS includes a modulation scheme BPSK corresponding to the spatial stream 2 and a modulation scheme 16-QAM corresponding to a spatial stream 1. According to Formula 1, elements in the MCS pattern, a coded bit 1 of the modulation scheme BPSK, and a coded bit 4 of the modulation scheme 16-QAM may be determined. In this case, it may be determined that an element corresponding to the spatial stream 2 is 0, and an element corresponding to the spatial stream 1 is 2.

Element determining manner 2: The element in the MCS pattern may be determined based on a code rate used for a corresponding spatial stream and a code rate used for the reference spatial stream.

For each number of spatial streams, after each MCS in an MCS set corresponding to the number of spatial streams is traversed, an MCS pattern table is generated based on an obtained MCS pattern.

For example, NSS=2, and the element determining manner 1 is used. Modulation scheme combinations that can be used for the spatial stream 2 and the spatial stream 1 and that are included in the MCS set include: {BPSK, QPSK}, {BPSK, 16-QAM}, {BPSK, 64-QAM}, {BPSK, 256-QAM}, {BPSK, 1024-QAM}, {BPSK, 4096-QAM}, {QPSK, 16-QAM}, {QPSK, 64-QAM}, {QPSK, 256-QAM}, {QPSK, 1024-QAM}, {QPSK, 4096-QAM}, {16-QAM, 64-QAM}, {16-QAM, 256-QAM}, {16-QAM, 1024-QAM}, {16-QAM, 4096-QAM}, {64-QAM, 256-QAM}, {64-QAM, 1024-QAM}, {64-QAM, 4096-QAM}, {256-QAM, 1024-QAM}, {256-QAM, 4096-QAM}, and {1024-QAM, 4096-QAM}. In this case, the foregoing modulation scheme combinations may be traversed, and elements respectively corresponding to the spatial stream 2 and the spatial stream 1 may be determined in the element determining manner 1, to generate an MCS pattern table corresponding to NSS=2.

For example, the MCS pattern table corresponding to the NSS of 2 is shown in Table 1.

Table 1

| NSS=2 | | |
|---|---|---|
| MCS pattern index | Spatial stream 1 | Spatial stream 2 |
| 0 | 1 | 0 |
| 1 | 2 | 0 |
| 2 | 3 | 0 |
| 3 | x | 0 |

In Table 1, a value of x is greater than 3. In Table 1, the element x corresponding to the MCS pattern index 3 combines all cases greater than 3 into one MCS pattern. For the modulation scheme combinations used for the spatial stream 2 and the spatial stream 1 in the foregoing example, modulation scheme combinations corresponding to the MCS pattern index 3 include: {BPSK, 256-QAM}, {BPSK, 1024-QAM}, {BPSK, 4096-QAM}, {QPSK, 1024-QAM}, {QPSK, 4096-QAM}, and {16-QAM, 4096-QAM}.

Based on the same principle, an MCS pattern table corresponding to the NSS of 3 is shown in Table 2.

Table 2

| NSS=3 | | | |
|---|---|---|---|
| MCS pattern index | Spatial stream 1 | Spatial stream 2 | Spatial stream 3 |
| 0 | 1 | 1 | 0 |
| 1 | 2 | 2 | 0 |
| 2 | 3 | 3 | 0 |
| 3 | x | x | 0 |
| 4 | 1 | 0 | 0 |
| 5 | 2 | 0 | 0 |
| 6 | 3 | 0 | 0 |
| 7 | x | 0 | 0 |
| 8 | 2 | 1 | 0 |
| 9 | 3 | 1 | 0 |
| 10 | x | 1 | 0 |
| 11 | 3 | 2 | 0 |
| 12 | x | 2 | 0 |
| 13 | x | y | 0 |

In Table 2, a value of x is greater than 3, a value of y is greater than 2, and x>y.

For example, for the MCS pattern index 3 in Table 2, correspondingly, a value corresponding to a spatial stream 1 is x, a value corresponding to a spatial stream 2 is x, and a value corresponding to a spatial stream 3 is 0. In this case, it indicates that all cases in which the value corresponding to the spatial stream 1 is greater than 3 and the value corresponding to the spatial stream 2 is greater than 3 are combined into one MCS pattern. For another example, for the MCS pattern index 13 in Table 2, correspondingly, a value corresponding to a spatial stream 1 is x, a value corresponding to a spatial stream 2 is y, and a value corresponding to a spatial stream 3 is 0. In this case, it indicates that all cases in which the value corresponding to the spatial stream 1 is greater than 3 and the value corresponding to the spatial stream 2 is greater than 2 are combined into one MCS pattern.

Based on the same principle, an MCS pattern table corresponding to the NSS of 4 is shown in Table 3.

Table 3

| NSS=4 | | | | |
|---|---|---|---|---|
| MCS pattern identifier | Spatial stream 1 | Spatial stream 2 | Spatial stream 3 | Spatial stream 4 |
| 0 | 1 | 1 | 1 | 0 |
| 1 | 2 | 2 | 2 | 0 |
| 2 | 3 | 3 | 3 | 0 |
| 3 | x | x | x | 0 |
| 4 | 1 | 0 | 0 | 0 |
| 5 | 2 | 0 | 0 | 0 |
| 6 | 3 | 0 | 0 | 0 |
| 7 | x | 0 | 0 | 0 |
| 8 | 1 | 1 | 0 | 0 |
| 9 | 2 | 2 | 0 | 0 |
| 10 | 3 | 3 | 0 | 0 |
| 11 | x | x | 0 | 0 |
| 12 | 2 | 2 | 1 | 0 |
| 13 | 3 | 3 | 1 | 0 |
| 14 | x | x | 1 | 0 |
| 15 | 3 | 3 | 2 | 0 |
| 16 | x | x | 2 | 0 |
| 17 | x | x | y | 0 |
| 18 | 2 | 1 | 1 | 0 |
| 19 | 3 | 1 | 1 | 0 |
| 20 | x | 1 | 1 | 0 |
| 21 | 3 | 2 | 2 | 0 |
| 22 | x | 2 | 2 | 0 |
| 23 | x | y | y | 0 |
| 24 | 2 | 1 | 0 | 0 |
| 25 | 3 | 1 | 0 | 0 |
| 26 | x | 1 | 0 | 0 |
| 27 | 3 | 2 | 0 | 0 |
| 28 | x | 2 | 0 | 0 |
| 29 | x | y | 0 | 0 |
| 30 | 3 | 2 | 1 | 0 |
| 31 | x | 2 | 1 | 0 |
| 32 | x | y | 1 | 0 |
| 33 | x | y | 2 | 0 |
| 34 | x | y | z | 0 |

In Table 3, a value of x is greater than 3, a value of y is greater than 2, a value of z is greater than 2, and x>y>z.

For example, for the MCS pattern index 34 in Table 3, a value corresponding to a spatial stream 1 is x, a value corresponding to a spatial stream 2 is y, a value corresponding to a spatial stream 3 is z, and a value corresponding to a spatial stream 4 is 0. In this case, it indicates that all cases in which the value corresponding to the spatial stream 1 is greater than 3, the value corresponding to the spatial stream 2 is greater than 2, and the value corresponding to the spatial stream 3 is greater than 2 are combined into one MCS pattern.

After MCS pattern tables for different NSSs are generated, an MCS subtable corresponding to each MCS pattern in the MCS pattern table is determined. Optionally, when the MCS subtable is generated, an MCS that meets the constraint indicated by the element included in the MCS pattern is determined based on the element included in the MCS pattern, to form the MCS subtable corresponding to the MCS pattern.

For example, when NSS=2, if the MCS pattern includes an element 1 corresponding to a spatial stream 1 and an element 0 corresponding to a spatial stream 2, modulation scheme combinations included in the MCS subtable may include {spatial stream 1: QPSK, spatial stream 2: BPSK}, {spatial stream 1: 16-QAM, spatial stream 2: QPSK}, {spatial stream 1: 64-QAM, spatial stream 2: 16-QAM}, {spatial stream 1: 256-QAM, spatial stream 2: 64-QAM}, {spatial stream 1: 1024-QAM, spatial stream 2: 256-QAM}, and {spatial stream 1: 4096-QAM, spatial stream 2: 1024-QAM}.

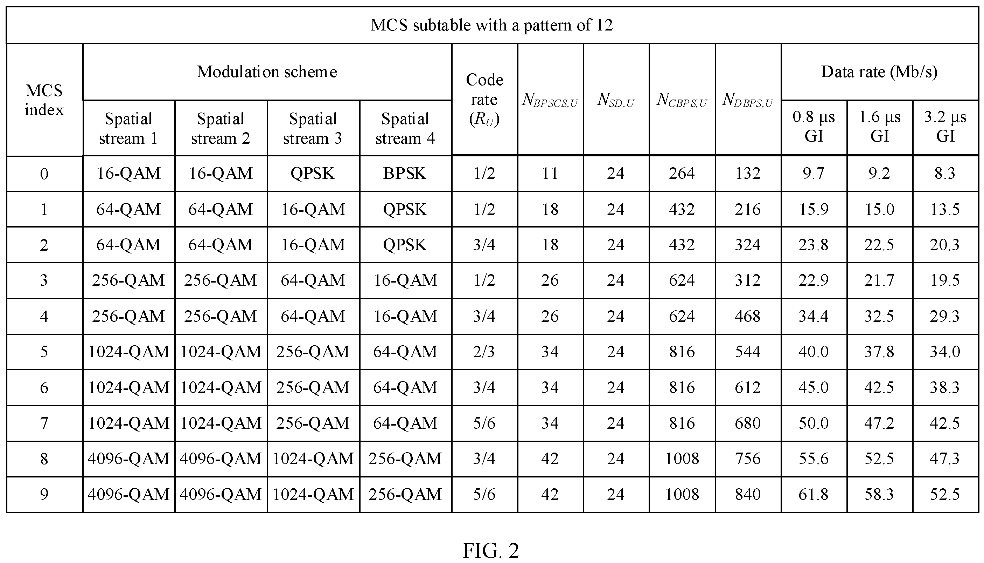

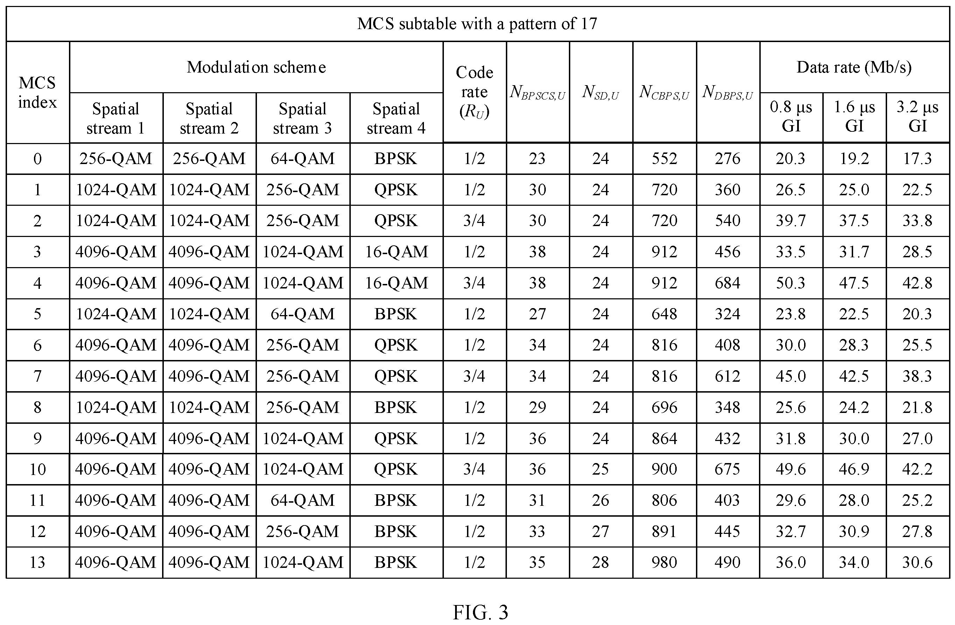

For example, when NSS=4, an MCS subtable corresponding to an MCS pattern whose index is 12 in Table 3 may be shown in FIG. 2, and an MCS subtable corresponding to an MCS pattern whose index is 17 in Table 3 may be shown in FIG. 3.

$N_{BPSCS,U}$ indicates a number of coded bits of each carrier in each spatial stream, $N_{SD,U}$ indicates a number of pieces of composite data of each spatial stream in each orthogonal frequency division multiplexing (orthogonal frequency division multiplexing, OFDM) symbol, $N_{CBPS,U}$ indicates a number of coded bits of each OFDM symbol, $N_{DBPS,U}$ indicates a number of data bits of each OFDM symbol, and the data rate is a data rate. FIG. 2 and FIG. 3 separately show data rates in different guard intervals (guard intervals, GIs).

In a process of generating the MCS pattern table and the MCS subtable, an MCS set that can be used for a plurality of spatial streams is determined based on each number of spatial streams (and is a theoretical combination formed by MCSs existing on the plurality of spatial streams). However, on an actual channel, there is a low probability that some MCSs are used. For example, when the NSS is 2, the MCS in which BPSK is used for the spatial stream 2 and 4096-QAM is used for the spatial stream 1 is seldom used on the actual channel. To further improve MCS selection efficiency, a number of MCS patterns included in the MCS pattern table may be reduced, and a number of MCS subtables may be reduced.

In a possible implementation, an MCS pattern included in the MCS pattern set matches a condition of a channel between the devices.

MCS patterns that match the condition of the channel between the devices form an optimized MCS pattern table.

During implementation, an occurrence probability of each MCS pattern in the MCS pattern table on different channels may be tested in a simulation manner, and whether the MCS pattern matches the condition of the channel between the devices is determined based on the occurrence probability. For example, if an occurrence probability of an MCS pattern is greater than a first preset threshold, it may be determined that the MCS pattern matches the condition of the channel between the devices, and the MCS pattern may be reserved in the MCS pattern table.

For example, in a simulation process, an MCS pattern whose occurrence probability is greater than the first preset threshold may be considered as an MCS pattern that matches an actual channel condition.

In the simulation process, occurrence probabilities of each MCS pattern in the MCS pattern table on an AWGN channel, a CHB channel, and a CHE channel may be separately tested, and an MCS pattern whose occurrence probability is greater than the first preset threshold is reserved in the MCS pattern table.

For example, in a simulation process of the AWGN channel, an occurrence probability of each MCS pattern in the MCS pattern tables corresponding to the NSS of 2, 3, and 4 is separately tested. It is assumed that the first preset threshold is set to 1%. In this case, an MCS pattern whose occurrence probability is greater than 1% is reserved in the MCS pattern table.

In this case, MCS patterns included in an optimized MCS pattern table with the NSS of 2 and occurrence probabilities are shown in Table 4.

Table 4

| NSS=2 | | | |
|---|---|---|---|
| MCS pattern index | Spatial stream 1 | Spatial stream 2 | Probability (%) |
| 0 | 1 | 0 | 38.0 |
| 1 | 2 | 0 | 35.0 |
| 2 | 3 | 0 | 14.8 |

(continued)

| NSS=2 | | | |
|---|---|---|---|
| MCS pattern index | Spatial stream 1 | Spatial stream 2 | Probability (%) |
| 3 | 4 | 0 | 4.6 |
| 4 | 5 | 0 | 1.2 |

MCS patterns included in an optimized MCS pattern table with the NSS of 3 and occurrence probabilities are shown in Table 5.

Table 5

| NSS=3 | | | | |
|---|---|---|---|---|
| MCS pattern index | Spatial stream 1 | Spatial stream 2 | Spatial stream 3 | Probability (%) |
| 0 | 2 | 1 | 0 | 27.9 |
| 1 | 3 | 2 | 0 | 22.2 |
| 2 | 2 | 2 | 0 | 9.0 |
| 3 | 4 | 3 | 0 | 8.7 |
| 4 | 1 | 1 | 0 | 6.1 |
| 5 | 3 | 1 | 0 | 5.5 |
| 6 | 1 | 0 | 0 | 4.5 |
| 7 | 3 | 3 | 0 | 4.5 |
| 8 | 4 | 2 | 0 | 2.8 |
| 9 | 5 | 4 | 0 | 2.6 |
| 10 | 2 | 0 | 0 | 1.9 |
| 11 | 4 | 4 | 0 | 1.5 |

MCS patterns included in an optimized MCS pattern table with the NSS of 4 and occurrence probabilities are shown in Table 6.

Table 6

| NSS=4 | | | | | |
|---|---|---|---|---|---|
| MCS pattern index | Spatial stream 1 | Spatial stream 2 | Spatial stream 3 | Spatial stream 4 | Probability (%) |
| 0 | 3 | 2 | 1 | 0 | 16.1 |
| 1 | 2 | 2 | 1 | 0 | 11.5 |
| 2 | 3 | 3 | 2 | 0 | 10.8 |
| 3 | 4 | 3 | 2 | 0 | 10.3 |
| 4 | 3 | 2 | 2 | 0 | 9.3 |
| 5 | 2 | 1 | 1 | 0 | 6.8 |
| 6 | 4 | 3 | 3 | 0 | 4.6 |
| 7 | 4 | 4 | 3 | 0 | 4.5 |
| 8 | 2 | 1 | 0 | 0 | 3.7 |
| 9 | 5 | 4 | 3 | 0 | 3.4 |
| 10 | 3 | 3 | 1 | 0 | 3.4 |
| 11 | 4 | 4 | 2 | 0 | 1.7 |

(continued)

| NSS=4 | | | | | |
|---|---|---|---|---|---|
| MCS pattern index | Spatial stream 1 | Spatial stream 2 | Spatial stream 3 | Spatial stream 4 | Probability (%) |
| 12 | 5 | 4 | 4 | 0 | 1.5 |
| 13 | 1 | 1 | 0 | 0 | 1.3 |
| 14 | 5 | 5 | 4 | 0 | 1.2 |
| 15 | 4 | 3 | 1 | 0 | 1.2 |
| 16 | 2 | 2 | 2 | 0 | 1.1 |

For example, in a simulation process of the CHB channel, an occurrence probability of each MCS pattern in the MCS pattern tables corresponding to the NSS of 2, 3, and 4 is separately tested. It is assumed that the first preset threshold is set to 1%. In this case, an MCS pattern whose occurrence probability is greater than 1% is reserved in the MCS pattern table.

In this case, MCS patterns included in an optimized MCS pattern table with the NSS of 2 and occurrence probabilities are shown in Table 7.

Table 7

| NSS=2 | | | |
|---|---|---|---|
| MCS pattern index | Spatial stream 1 | Spatial stream 2 | Probability (%) |
| 0 | 2 | 0 | 35.7 |
| 1 | 1 | 0 | 31.8 |
| 2 | 3 | 0 | 18.4 |
| 3 | 4 | 0 | 6.8 |
| 4 | 5 | 0 | 1.9 |

MCS patterns included in an optimized MCS pattern table with the NSS of 3 and occurrence probabilities are shown in Table 8.

Table 8

| NSS=3 | | | | |
|---|---|---|---|---|
| MCS pattern index | Spatial stream 1 | Spatial stream 2 | Spatial stream 3 | Probability (%) |
| 0 | 3 | 2 | 0 | 23.3 |
| 1 | 2 | 1 | 0 | 22.3 |
| 2 | 4 | 3 | 0 | 10.9 |
| 3 | 3 | 1 | 0 | 7.3 |
| 4 | 2 | 2 | 0 | 7.2 |
| 5 | 4 | 2 | 0 | 4.8 |
| 6 | 3 | 3 | 0 | 4.6 |
| 7 | 1 | 1 | 0 | 3.6 |
| 8 | 5 | 4 | 0 | 3.4 |
| 9 | 1 | 0 | 0 | 2.8 |
| 10 | 4 | 4 | 0 | 1.9 |
| 11 | 2 | 0 | 0 | 1.9 |
| 12 | 5 | 3 | 0 | 1.6 |

(continued)

| NSS=3 | | | | |
|---|---|---|---|---|
| MCS pattern index | Spatial stream 1 | Spatial stream 2 | Spatial stream 3 | Probability (%) |
| 13 | 6 | 5 | 0 | 1.5 |
| 14 | 6 | 4 | 0 | 1.1 |

MCS patterns included in an optimized MCS pattern table with the NSS of 4 and occurrence probabilities are shown in Table 9.

Table 9

| NSS=4 | | | | | |
|---|---|---|---|---|---|
| MCS pattern index | Spatial stream 1 | Spatial stream 2 | Spatial stream 3 | Spatial stream 4 | Probability (%) |
| 0 | 3 | 2 | 1 | 0 | 15.9 |
| 1 | 4 | 3 | 2 | 0 | 13.4 |
| 2 | 3 | 3 | 2 | 0 | 9.4 |
| 3 | 2 | 2 | 1 | 0 | 7.2 |
| 4 | 3 | 2 | 2 | 0 | 6.9 |
| 5 | 4 | 4 | 3 | 0 | 5.0 |
| 6 | 5 | 4 | 3 | 0 | 4.7 |
| 7 | 4 | 3 | 3 | 0 | 4.2 |
| 8 | 3 | 3 | 1 | 0 | 4.1 |
| 9 | 2 | 1 | 1 | 0 | 3.7 |
| 10 | 6 | 5 | 4 | 0 | 2.9 |
| 11 | 4 | 4 | 2 | 0 | 2.8 |
| 12 | 2 | 1 | 0 | 0 | 2.5 |
| 13 | 4 | 3 | 1 | 0 | 2.4 |
| 14 | 5 | 5 | 4 | 0 | 1.8 |
| 15 | 5 | 4 | 4 | 0 | 1.4 |
| 16 | 5 | 4 | 2 | 0 | 1.1 |

For example, in a simulation process of the CHE channel, an occurrence probability of each MCS pattern in the MCS pattern tables corresponding to the NSS of 2, 3, and 4 is separately tested. It is assumed that the first preset threshold is set to 1%. In this case, an MCS pattern whose occurrence probability is greater than 1% is reserved in the MCS pattern table.

In this case, MCS patterns included in an optimized MCS pattern table with the NSS of 2 and occurrence probabilities are shown in Table 10.

Table 10

| NSS=2 | | | |
|---|---|---|---|
| MCS pattern index | Spatial stream 1 | Spatial stream 2 | Probability (%) |
| 0 | 1 | 0 | 44.1 |
| 1 | 2 | 0 | 33.9 |
| 2 | 3 | 0 | 11.0 |
| 3 | 4 | 0 | 3.4 |

MCS patterns included in an optimized MCS pattern table with the NSS of 3 and occurrence probabilities are shown in Table 11.

Table 11

| NSS=3 | | | | |
|---|---|---|---|---|
| MCS pattern index | Spatial stream 1 | Spatial stream 2 | Spatial stream 3 | Probability (%) |
| 0 | 2 | 1 | 0 | 33.7 |
| 1 | 3 | 2 | 0 | 19.4 |
| 2 | 2 | 2 | 0 | 10.0 |
| 3 | 1 | 1 | 0 | 9.6 |
| 4 | 4 | 3 | 0 | 6.9 |
| 5 | 1 | 0 | 0 | 6.9 |
| 6 | 3 | 1 | 0 | 4.4 |
| 7 | 3 | 3 | 0 | 2.8 |
| 8 | 2 | 0 | 0 | 1.9 |
| 9 | 4 | 2 | 0 | 1.8 |
| 10 | 4 | 4 | 0 | 1.3 |

MCS patterns included in an optimized MCS pattern table with the NSS of 4 and occurrence probabilities are shown in Table 12.

Table 12

| NSS=4 | | | | | |
|---|---|---|---|---|---|
| MCS pattern index | Spatial stream 1 | Spatial stream 2 | Spatial stream 3 | Spatial stream 4 | Probability (%) |
| 0 | 2 | 2 | 1 | 0 | 16.8 |
| 1 | 3 | 2 | 1 | 0 | 16.7 |
| 2 | 2 | 1 | 1 | 0 | 11.4 |
| 3 | 3 | 2 | 2 | 0 | 10.6 |
| 4 | 3 | 3 | 2 | 0 | 8.4 |
| 5 | 4 | 3 | 2 | 0 | 8.2 |
| 6 | 2 | 1 | 0 | 0 | 5.1 |
| 7 | 4 | 3 | 3 | 0 | 4.2 |
| 8 | 4 | 4 | 3 | 0 | 4.2 |
| 9 | 1 | 1 | 0 | 0 | 2.7 |
| 10 | 3 | 3 | 1 | 0 | 2.3 |
| 11 | 4 | 4 | 2 | 0 | 1.6 |
| 12 | 2 | 2 | 2 | 0 | 1.2 |
| 13 | 2 | 2 | 0 | 0 | 1.1 |

After the MCS pattern tables corresponding to each number of spatial streams on different channels are obtained in the simulation process, for MCS pattern tables corresponding to a same number of spatial streams on different channels, the MCS pattern tables may be further optimized. For example, for a number of spatial streams, an MCS pattern whose occurrence probabilities on different channels are all greater than the first preset threshold in MCS patterns may be reserved in the MCS pattern table.

For example, when NSS=2, MCS patterns whose corresponding occurrence probabilities are all greater than 1% are selected from Table 4, Table 7, and Table 10, to generate an optimized MCS pattern table corresponding to NSS=2. In this case, the optimized MCS pattern table corresponding to NSS=2 may be shown in Table 13.

Table 13

| NSS=2 | | |
|---|---|---|
| MCS pattern index | Spatial stream 1 | Spatial stream 2 |
| 0 | 1 | 0 |
| 1 | 2 | 0 |
| 2 | 3 | 0 |
| 3 | x | 0 |

In Table 13, a value of x is greater than 3.

For example, when NSS=3, MCS patterns whose corresponding occurrence probabilities are all greater than 1% are selected from Table 5, Table 8, and Table 11, to generate an optimized MCS pattern table corresponding to NSS=3. In this case, the optimized MCS pattern table corresponding to NSS=3 may be shown in Table 14.

Table 14

| NSS=3 | | | |
|---|---|---|---|
| MCS pattern index | Spatial stream 1 | Spatial stream 2 | Spatial stream 3 |
| 0 | 1 | 1 | 0 |
| 1 | 2 | 2 | 0 |
| 2 | 1 | 0 | 0 |
| 3 | 2 | 1 | 0 |
| 4 | 3 | 1 | 0 |
| 5 | 3 | 2 | 0 |
| 6 | x | 2 | 0 |
| 7 | x | y | 0 |

In Table 14, a value of x is greater than 3, a value of y is greater than 2, and x>y.

For example, when NSS=4, MCS patterns whose corresponding occurrence probabilities are all greater than 1% are selected from Table 6, Table 9, and Table 12, to generate an optimized MCS pattern table corresponding to NSS=4. In this case, the optimized MCS pattern table corresponding to NSS=4 may be shown in Table 15.

Table 15

| NSS=4 | | | | |
|---|---|---|---|---|
| MCS pattern index | Spatial stream 1 | Spatial stream 2 | Spatial stream 3 | Spatial stream 4 |
| 0 | 2 | 2 | 2 | 0 |
| 1 | 1 | 1 | 0 | 0 |
| 2 | 2 | 2 | 0 | 0 |
| 3 | 2 | 2 | 1 | 0 |
| 4 | 3 | 3 | 1 | 0 |
| 5 | 3 | 3 | 2 | 0 |
| 6 | x | x | 2 | 0 |
| 7 | x | x | y | 0 |
| 8 | 2 | 1 | 1 | 0 |

(continued)

| NSS=4 | | | | |
|---|---|---|---|---|
| MCS pattern index | Spatial stream 1 | Spatial stream 2 | Spatial stream 3 | Spatial stream 4 |
| 9 | 3 | 2 | 2 | 0 |
| 10 | x | y | y | 0 |
| 11 | 2 | 1 | 0 | 0 |
| 12 | 3 | 2 | 1 | 0 |
| 13 | x | y | 1 | 0 |
| 14 | x | y | 2 | 0 |
| 15 | x | y | z | 0 |

In Table 15, a value of x is greater than 3, a value of y is greater than 2, a value of z is greater than 2, and x>y>z.

It can be learned from the foregoing MCS pattern tables corresponding to different numbers of spatial streams that, a number of MCS patterns included in the optimized MCS pattern table is less than a number of MCS patterns included in the MCS pattern table before optimization. For example, when NSS=4, Table 3 of MCS patterns before optimization includes 35 MCS patterns, and Table 15 of MCS patterns after optimization includes 16 MCS patterns. Therefore, through simulation optimization, the number of MCS patterns included in the MCS pattern table can be effectively reduced, and correspondingly, data in the MCS subtable can be reduced, to further improve MCS selection efficiency.

To improve MCS selection efficiency, embodiments of this application provide a communication method. For example, in the communication method in this application, a first device may be a STA, and a second device may be an AP; or the first device may be an AP, and the second device may be a STA.

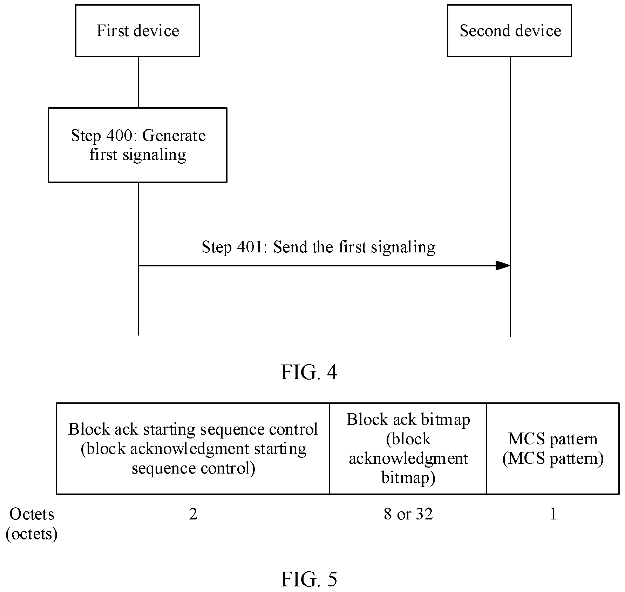

As shown in FIG. 4, the method may include the following steps.

Step 400: The first device generates first signaling.

The first signaling may include information about an MCS pattern and information about a target MCS, the MCS pattern corresponds to a plurality of candidate MCSs, the target MCS is determined from the plurality of candidate MCSs, and the target MCS includes a modulation scheme corresponding to each of a plurality of spatial streams between the first device and the second device.

For example, the MCS pattern may be an MCS pattern determined from an MCS pattern table, and the plurality of candidate MCSs corresponding to the MCS pattern may be MCSs included in an MCS subtable corresponding to the MCS pattern.

Based on the foregoing descriptions of the MCS, one MCS includes a modulation scheme corresponding to each spatial stream between the first device and the second device.

For example, the first signaling may be a communication frame to be sent by the first device to the second device.

The information about the MCS pattern included in the first signaling may be an index of the MCS pattern, or the information about the MCS pattern may be an element included in the MCS pattern, or the information about the MCS pattern may be other information that can identify the MCS pattern.

The information about the target MCS included in the first signaling may be an index of the target MCS. For example, the information about the target MCS may be an index of the target MCS in the MCS subtable.

Step 401: The first device sends the first signaling to the second device.

Correspondingly, the second device receives the first signaling sent by the first device. The second device may obtain the information about the MCS pattern and the information about the target MCS from the first signaling, and decode the first signaling based on the information about the MCS pattern and the information about the target MCS.

In a possible implementation, the first device indicates the information about the MCS pattern and the information about the target MCS in a SIG field of the first signaling.

Optionally, the SIG field includes a first field and a second field, the first field indicates the information about the MCS pattern, and the second field indicates the information about the target MCS.

Correspondingly, after receiving the first signaling, the second device may parse the information about the MCS pattern from the first field in the SIG field of the first signaling, and may parse the information about the target MCS from the second field in the SIG field of the first signaling.

The second device may decode the first signaling based on the information about the MCS pattern and the information about the target MCS that are obtained from the SIG field of the first signaling.

The first signaling sent by the first device to the second device includes the information about the MCS pattern and the information about the target MCS, and the information about the MCS pattern and the information about the target MCS jointly indicate an MCS used by the first device to send signaling to the second device. Each MCS pattern corresponds to one MCS subtable. During MCS selection, the first device first determines the MCS pattern, and then selects the MCS from the MCS subtable corresponding to the MCS pattern. Because the MCS subtable corresponding to the MCS pattern includes a small number of MCSs, the first device can quickly select the MCS from the MCS subtable corresponding to the MCS pattern, thereby improving MCS selection efficiency of the first device. In addition, the first signaling sent by the first device to the second device includes the information about the MCS pattern and the information about the target MCS. The second device determines, based on the information about the MCS pattern, the MCS pattern selected by the first device, and determines, from the MCS subtable corresponding to the MCS pattern based on the information about the target MCS, the MCS selected by the first device. In this way, through a joint indication of the information about the MCS pattern and the information about the target MCS, the second device can accurately determine the MCS selected by the first device, thereby ensuring reliability of communication between the devices.

If the first signaling generated by the first device in step 400 includes the information about the MCS pattern and the information about the target MCS, the first device needs to determine the MCS pattern and the target MCS.

In a possible implementation, the first device determines the MCS pattern, and determines the target MCS from the plurality of candidate MCSs (or referred to as the MCS subtable) corresponding to the MCS pattern.

The following describes a manner in which the first device determines the MCS pattern.

The following describes possible implementations in which the first device determines the MCS pattern.

Manner 1: The second device performs a direct indication.

Optionally, the second device sends pattern indication information to the first device, where the pattern indication information indicates the MCS pattern. Correspondingly, the first device receives the pattern indication information sent by the second device.

In Manner 1, the second device determines the MCS pattern, and after determining the MCS pattern, the second device sends the pattern indication information to the first device.

The second device may determine the MCS pattern based on channel quality information of each spatial stream between the second device and the first device.

The following describes in detail a manner in which the second device determines the MCS pattern.

1. The second device receives second signaling sent by the first device.

For example, the second signaling may be a communication frame. The communication frame may be any type of communication frame sent by the first device to the second device, for example, any data frame. Alternatively, the second signaling may be a signal dedicated to channel measurement, for example, a reference signal.

Modulation and coding may be performed on the communication frame by using an initialized MCS. Optionally, the initialized MCS may be a preset MCS, or the first device may determine the initialized MCS based on channel quality information that is of each spatial stream and that is fed back by the second device in a sounding phase. A manner of determining the initialized MCS is not limited in this application.

2. The second device measures, based on the received second signaling, the channel quality information corresponding to each of the plurality of spatial streams between the first device and the second device.

For example, the channel quality information may be any parameter that can indicate channel quality. For example, the channel quality information may be a signal-to-noise ratio (signal-to-noise ratio, SNR).

3. The second device determines the MCS pattern based on the channel quality information corresponding to each spatial stream.

The second device may determine the MCS pattern in a plurality of different manners. The following separately provides descriptions.

MCS pattern determining manner 1: The second device determines an element corresponding to each spatial stream in the MCS pattern, and obtains the MCS pattern based on the element corresponding to each spatial stream.

In a possible implementation, for each spatial stream, the second device determines, based on the channel quality information corresponding to the spatial stream and channel quality information corresponding to a reference spatial stream in the plurality of spatial streams, the element corresponding to the spatial stream.

For example, the second device may determine, based on a difference between the channel quality information corresponding to the spatial stream and the channel quality information corresponding to the reference spatial stream in the plurality of spatial streams, the element corresponding to the spatial stream.

The reference spatial stream is a spatial stream with a largest or smallest sequence number in the plurality of spatial streams, or a sequence number of the reference spatial stream is adjacent to a sequence number of the spatial stream.

For a case in which the reference spatial stream is the spatial stream with the largest or smallest sequence number in the plurality of spatial streams:

For example, when an element corresponding to a spatial stream a (which may be any one of the plurality of spatial streams) is determined, the element corresponding to the spatial stream may be determined based on a difference between channel quality information corresponding to the spatial stream a and the channel quality information corresponding to the reference spatial stream.

For example, N thresholds are preset. When the difference between the channel quality information corresponding to the spatial stream a and the channel quality information corresponding to the reference spatial stream exceeds an $i^{th}$ threshold, the element corresponding to the spatial stream a is i. It is assumed that the channel quality information is an SNR, and the N preset thresholds include x1, x2, x3, x4, x5 and x6 in ascending order. When a difference between an SNR corresponding to the spatial stream a and an SNR corresponding to the reference spatial stream is greater than x2 and less than x3, it may be determined that the difference between the SNR corresponding to the spatial stream a and the SNR corresponding to the reference spatial stream exceeds a $2^{nd}$ threshold, and the element corresponding to the spatial stream a is 2.

If the difference between the channel quality information corresponding to the spatial stream a and the channel quality information corresponding to the reference spatial stream does not exceed the threshold, the element corresponding to the spatial stream a is the same as an element corresponding to the reference spatial stream.

For another example, an increment w is preset. When the difference between the channel quality information corresponding to the spatial stream a and the channel quality information corresponding to the reference spatial stream is j times the increment (a multiple may be calculated through rounding up or down), the element corresponding to the spatial stream a is j. It is assumed that the channel quality information is an SNR, and a difference between an SNR corresponding to the spatial stream a and an SNR corresponding to the reference spatial stream is three times the increment. In this case, the element corresponding to the spatial stream a is 3.

A value of the threshold or the increment may be a value obtained through simulation, or may be an empirical value of a person skilled in the art. A manner of determining the value of the threshold or the increment is not limited in this application.

For a case in which the sequence number of the reference spatial stream is adjacent to the sequence number of the spatial stream:

For example, when an element corresponding to a spatial stream a (which may be any one of the plurality of spatial streams) is determined, a sequence number of a spatial stream b is adjacent to a sequence number of the spatial stream a. In this case, the element corresponding to the spatial stream may be determined based on a difference between channel quality information corresponding to the spatial stream a and channel quality information corresponding to the spatial stream b.

For example, an increment of the element corresponding to the spatial stream a relative to an element corresponding to the spatial stream b is determined in the foregoing manner of presetting a threshold or an increment, to determine the element corresponding to the spatial stream a. For example, when the element corresponding to the spatial stream b is 2, and the difference between the channel quality information of the spatial stream a and the channel quality information of the spatial stream b exceeds a $1^{st}$ threshold, the element corresponding to the spatial stream a is 3. Alternatively, when the element corresponding to the spatial stream b is 2, and the difference between the channel quality information of the spatial stream a and the channel quality information of the spatial stream b is twice the increment, the element corresponding to the spatial stream a is 4.

When the difference between the channel quality information of the spatial stream a and the channel quality information of the spatial stream b does not exceed the threshold, the element corresponding to the spatial stream a is the same as the element corresponding to the spatial stream b.

The second device may sort the spatial streams in ascending order of channel quality corresponding to the spatial streams, for example, number a spatial stream with highest channel quality as 1. When NSS=4, a spatial stream with highest channel quality is numbered 1. The second device may set an element corresponding to a spatial stream 4 to 0. The manner of presetting a threshold is used. A difference between channel quality information of a spatial stream 3 and channel quality information of the spatial stream 4 is determined. It is assumed that the difference exceeds the $1^{st}$ threshold. In this case, an element corresponding to the spatial stream 3 is 1. A difference between channel quality information of a spatial stream 2 and the channel quality information of the spatial stream 3 is determined. It is assumed that the difference exceeds the $1^{st}$ threshold. In this case, an element corresponding to the spatial stream 2 is 2. A difference between channel quality information of a spatial stream 1 and the channel quality information of the spatial stream 2 is determined. It is assumed that the difference exceeds a $2^{nd}$ threshold. In this case, an element corresponding to the spatial stream 1 is 4.

Optionally, after determining the element corresponding to each spatial stream, the second device may search the MCS pattern table for the MCS pattern corresponding to the element corresponding to each spatial stream.

The MCS pattern table may be pre-stored on the second device, or the MCS pattern table is pre-agreed on in a protocol.

MCS pattern determining manner 2: The second device determines the information about the MCS pattern based on channel quality information corresponding to a part or all of the plurality of spatial streams.

In a possible implementation, the second device inputs, based on an AI model, the channel quality information corresponding to the part or all of the plurality of spatial streams into the AI model, to obtain the information about the MCS pattern output by the AI model.

The AI model may be a network model obtained through training based on a sample.

For example, the information about the MCS pattern output by the AI model may be the index of the MCS pattern.

After determining the MCS pattern, the second device may send the pattern indication information to the first device in a plurality of different manners.

The pattern indication information may include the index or the element of the MCS pattern.

For example, if the index of the MCS pattern determined by the second device is 12, and elements of the MCS pattern include 2, 2, 1, and 0, the pattern indication information sent by the second device to the first device may include 12, or the MCS pattern may include 2, 2, 1, and 0.

Optionally, the pattern indication information may be carried in a field of an acknowledgment frame or a management frame.

The acknowledgment frame may include but is not limited to an ack frame and a block acknowledgment (Block Ack, BA) frame.

For example, the second device may send the pattern indication information to the first device by using the acknowledgment frame or the management frame. For example, a new field is added to the acknowledgment frame or the management frame, and the new field may carry the pattern indication information.

The BA frame is used as an example. In a frame structure of the BA frame shown in FIG. 5, an MCS pattern field may be newly added to the BA frame, and the MCS pattern field may carry the pattern indication information. Optionally, to reduce signaling overheads, the MCS pattern field may carry the index of the MCS pattern.

In addition, in an optional solution, the acknowledgment frame or the management frame may include a pattern presence indication field, and the pattern presence indication field may indicate whether the acknowledgment frame or the management frame carries the pattern indication information. The BA frame is used as an example. The BA frame may further include an MCS pattern presence field. The MCS pattern presence field may occupy 1 bit. The MCS pattern presence field being 1 may indicate that the BA frame has the MCS pattern field. The MCS pattern presence field being 0 may indicate that the BA frame does not have the MCS pattern field.

For another example, the second device may send the pattern indication information to the first device after receiving a trigger (trigger) frame sent by the first device.

After receiving the trigger frame, the second device transmits a trigger-based PPDU. An information element (which may be the same as an information element used when the management frame is used to transmit the pattern indication information) may be carried in a data field, and the information element indicates the MCS pattern.

Manner 2: The second device performs an indirect indication.

Optionally, the second device sends a channel measurement result to the first device, where the channel measurement result indicates channel quality information of a part or all of the plurality of spatial streams. Correspondingly, the first device receives the channel measurement result from the second device, and the first device determines the MCS based on the channel measurement result.

The channel measurement result may include one of the following information.

1. The channel measurement result includes channel quality information of each of the plurality of spatial streams;
2. The channel measurement result includes the channel quality information of the part of the plurality of spatial streams.
3. The channel measurement result includes channel quality information of the reference spatial stream in the plurality of spatial streams and information about a difference between channel quality information of different spatial streams in the plurality of spatial streams.

Optionally, when the channel measurement result includes the channel quality information of the part of the plurality of spatial streams, for at least two spatial streams for which a difference between channel quality information is less than a second preset threshold in the plurality of spatial streams, a channel measurement result field may carry channel quality information of only one of the at least two spatial streams. For example, when NSS=4, if a difference between channel quality information of a spatial stream 2 and channel quality information of a spatial stream 3 is less than the second preset threshold, and a difference between the channel quality information of the spatial stream 3 and channel quality information of a spatial stream 4 is less than the second preset threshold, the channel measurement result includes channel quality information of a spatial stream 1 and the channel quality information of the spatial stream 2.

When the channel measurement result includes the channel quality information of the reference spatial stream in the plurality of spatial streams and the information about a difference between channel quality information of different spatial streams in the plurality of spatial streams, the reference spatial stream may be any one of the plurality of spatial streams, and the difference information may be information about a difference between each spatial stream other than the reference spatial stream and the reference spatial stream. For example, if NSS=4, the reference spatial stream may be a spatial stream 4. In this case, the channel measurement result includes a difference between channel quality information of a spatial stream 1 and channel quality information of the spatial stream 4, a difference between channel quality information of a spatial stream 2 and the channel quality information of the spatial stream 4, a difference between channel quality information of a spatial stream 3 and the channel quality information of the spatial stream 4, and the channel quality information of the spatial stream 4. Alternatively, the reference spatial stream may be a spatial stream with a largest or smallest sequence number in the plurality of spatial streams, and the difference information may be information about a difference between channel quality information of two adjacent spatial streams. For example, if NSS=3, the reference spatial stream may be a spatial stream 1. In this case, the channel measurement result includes channel quality information of the spatial stream 1, a difference between channel quality information of a spatial stream 2 and the channel quality information of the spatial stream 1, a difference between channel quality information of a spatial stream 3 and the channel quality information of the spatial stream 2, and a difference between channel quality information of a spatial stream 4 and the channel quality information of the spatial stream 3.

For a manner in which the second device determines the channel quality information of each of the plurality of spatial streams, refer to the descriptions in Manner 1. Details are not described herein again.

In a possible implementation, the second device may send the channel measurement result to the first device in at least one of the following manners.

Manner 1: The second device sends the channel measurement result by using an acknowledgment frame or a management frame.

Correspondingly, the first device receives the channel measurement result sent by the second device by using the acknowledgment frame or the management frame.

Optionally, the channel measurement result field is added to the acknowledgment frame or the management frame, and the channel measurement result is carried in the channel measurement result field.

When the channel measurement result includes the channel quality information of each of the plurality of spatial streams, the channel measurement result field in the acknowledgment frame or the management frame may carry the channel quality information of each spatial stream.

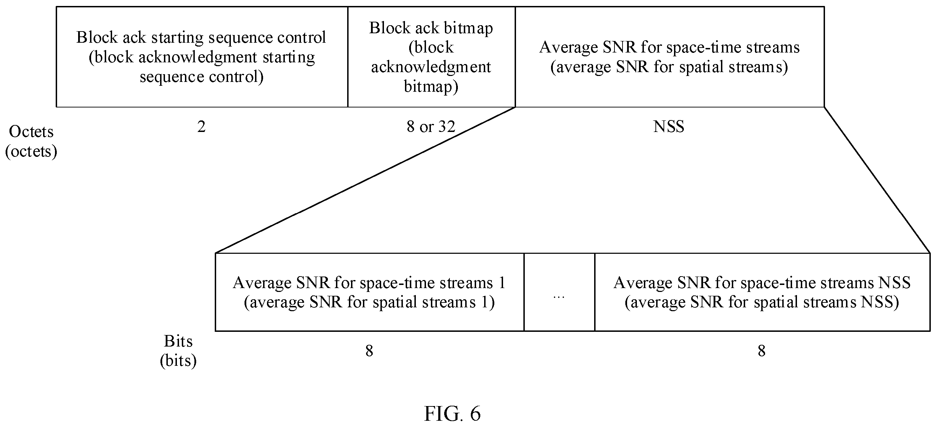

A BA frame is used as an example. In a frame structure of the BA frame shown in FIG. 6, it is assumed that the channel quality information is an SNR, and an average SNR for space-time streams (average SNR for spatial streams) field may be newly added to the BA frame. The average SNR for space-time streams field carries the channel quality information of each spatial stream, for example, carries an average SNR for space-time streams 1 (average SNR for spatial streams 1), an average SNR for space-time streams 2 (average SNR for spatial streams 2), ..., and an average SNR for space-time streams NSS (average SNR for spatial streams NSS), where the NSS is a number of spatial streams. An SNR of each spatial stream may occupy 8 bits.

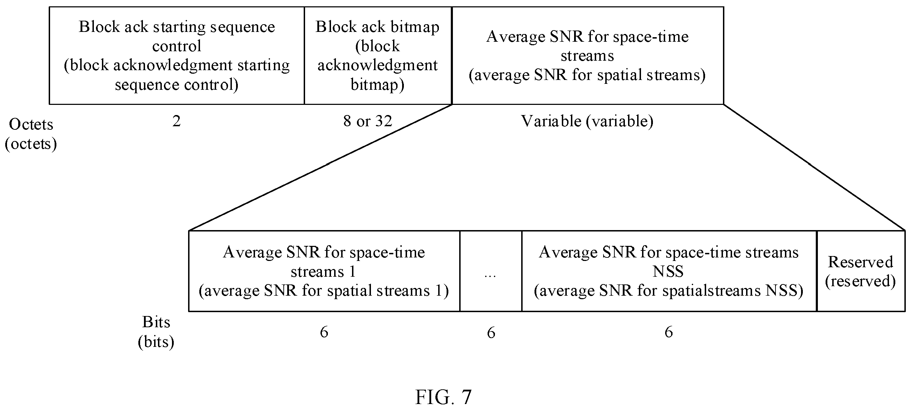

For another example, in a frame structure of the BA frame shown in FIG. 7, it is assumed that the channel quality information is an SNR, and an average SNR for space-time streams field may be newly added to the BA frame. The average SNR for space-time streams field carries the channel quality information of each spatial stream, for example, carries an average SNR for space-time streams 1 (SNR for spatial streams 1), an average SNR for space-time streams 2 (SNR for spatial streams 2), ..., and an average SNR for space-time streams NSS (SNR for spatial streams NSS), where the NSS is a number of spatial streams. The BA frame further includes a reserved (reserved) field, and a number of bits of the reserved field is used to ensure that the average SNR for space-time streams field includes an integer number of octets.

When the channel measurement result includes the channel quality information of the part of the plurality of spatial streams, the channel measurement result field in the acknowledgment frame or the management frame may carry the channel quality information of the part of the plurality of spatial streams.

For example, for at least two spatial streams for which a difference between channel quality information is less than the second preset threshold in the plurality of spatial streams, the channel measurement result field in the acknowledgment frame or the management frame may carry channel quality information of only one spatial stream. For example, when NSS=4, if a difference between channel quality information of a spatial stream 3 and channel quality information of a spatial stream 2 is less than the second preset threshold, and a difference between channel quality information of a spatial stream 4 and the channel quality information of the spatial stream 3 is less than the second preset threshold, the channel measurement result field in the acknowledgment frame or the management frame may carry channel quality information of a spatial stream 1 and the channel quality information of the spatial stream 2.

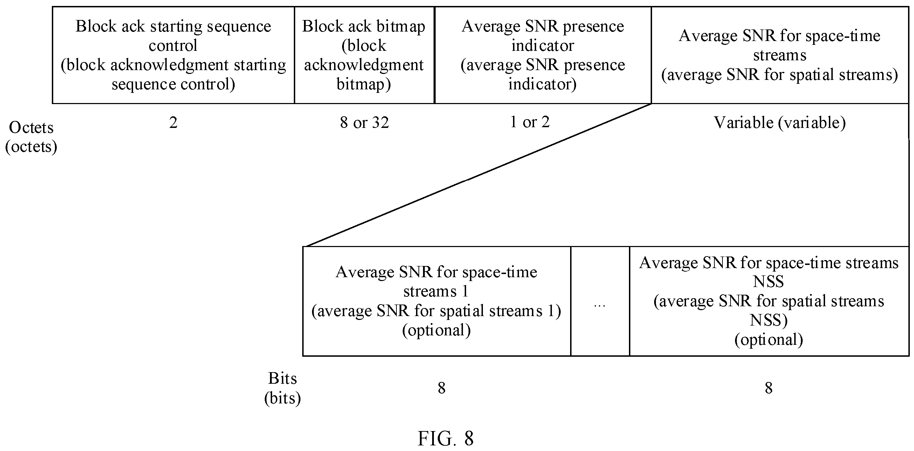

The BA frame is used as an example. In a frame structure of the BA frame shown in FIG. 8, it is assumed that the channel quality information is an SNR, and an average SNR for space-time streams field may be newly added to the BA frame. The average SNR for space-time streams field carries the channel quality information of the part of the spatial stream. For example, when NSS=4, if channel quality information of a spatial stream 2, a spatial stream 3, and a spatial stream 4 is the same, the average SNR for space-time streams field may carry an average SNR for space-time streams 1 (SNR for spatial streams 1) and an average SNR for space-time streams 2 (SNR for spatial streams 2). An SNR of each spatial stream may occupy 8 bits. In an average SNR presence indicator field in the BA frame, a $k^{th}$ bit is set to 1 to indicate that an average SNR for space-time stream k subfield exists, and the average SNR presence indicator field may occupy one or two octets.

When the channel measurement result includes the channel quality information of the reference spatial stream in the plurality of spatial streams and the information about a difference between channel quality information of different spatial streams in the plurality of spatial streams, the channel measurement result field in the acknowledgment frame or the management frame may carry the channel quality information of the reference spatial stream and the difference information.

The reference spatial stream may be any one of the plurality of spatial streams, and the difference information may be the information about the difference between each spatial stream other than the reference spatial stream and the reference spatial stream. For example, if NSS=4, the reference spatial stream may be a spatial stream 4. In this case, the channel measurement result field in the acknowledgment frame or the management frame may carry a difference between channel quality information of a spatial stream 1 and channel quality information of the spatial stream 4, a difference between channel quality information of a spatial stream 2 and the channel quality information of the spatial stream 4, a difference between channel quality information of a spatial stream 3 and the channel quality information of the spatial stream 4, and the channel quality information of the spatial stream 4.

Alternatively, the reference spatial stream may be the spatial stream with the largest or smallest sequence number in the plurality of spatial streams, and the difference information may be information about a difference between channel quality information of two adjacent spatial streams. For example, if NSS=3, the reference spatial stream may be a spatial stream 1. In this case, the channel measurement result field in the acknowledgment frame or the management frame may carry channel quality information of the spatial stream 1, a difference between channel quality information of a spatial stream 2 and the channel quality information of the spatial stream 1, and a difference between channel quality information of a spatial stream 3 and the channel quality information of the spatial stream 1.

Optionally, for the foregoing two manners in which the channel measurement result field in the acknowledgment frame or the management frame carries the channel quality information of the reference spatial stream and the difference information, if a difference between a spatial stream and the reference spatial stream is less than a third preset threshold, the channel measurement result field in the acknowledgment frame or the management frame may not carry the difference between the spatial stream and the reference spatial stream.

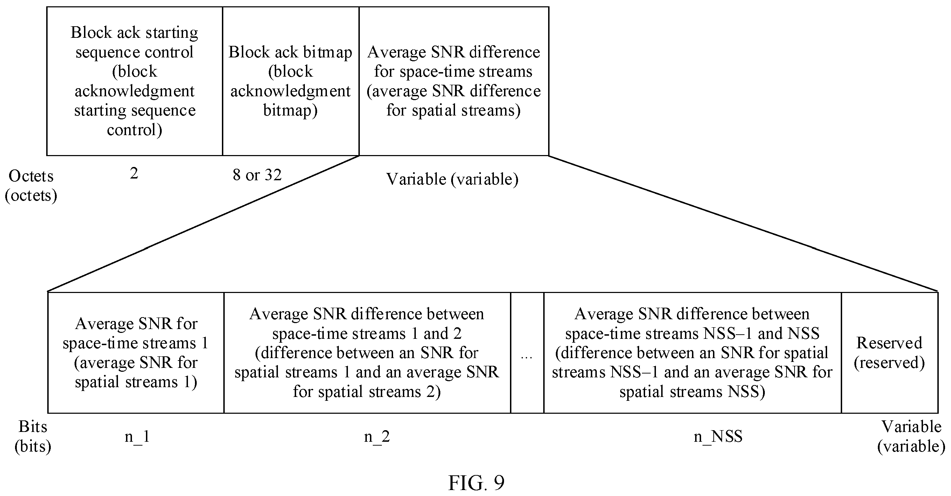

The BA frame is used as an example. In a frame structure of the BA frame shown in FIG. 9, it is assumed that the channel quality information is an SNR, and an average SNR difference for space-time streams (average SNR difference for spatial streams) field may be newly added to the BA frame. The average SNR difference for space-time streams field carries the channel quality information of the reference spatial stream and the difference information. For example, an average SNR for space-time streams 1 (average SNR for spatial streams 1), an average SNR difference between space-time streams 1 and 2 (difference between an average SNR for spatial streams 1 and an average SNR for spatial streams 2), ..., and an average SNR difference between space-time streams NSS-1 and NSS (difference between an average SNR for spatial streams NSS-1 and an average SNR for spatial streams NSS) are carried, where the NSS is a number of spatial streams. The BA frame further includes a reserved field, and a number of bits of the reserved field is used to ensure that the average SNR difference for space-time streams field includes an integer number of octets.

In addition, in an optional solution, the acknowledgment frame or the management frame may include a channel measurement result presence indication field, and the channel measurement result presence indication field may indicate whether the acknowledgment frame or the management frame includes the channel measurement result field. The BA frame is used as an example. The BA frame may further include an average SNR presence subfield. The average SNR presence subfield may occupy 1 bit. The average SNR presence subfield being 1 may indicate that the BA frame has the average SNR for space-time streams field or the average SNR difference for space-time streams field. The average SNR presence subfield being 0 may indicate that the BA frame does not have the average SNR for space-time streams field or the average SNR difference for space-time streams field.

Manner 2: After receiving the trigger (trigger) frame, the second device sends the channel measurement result to the first device.

The channel measurement result may include one of the foregoing described information.

Optionally, the first device sends the trigger frame to the second device, where the trigger frame may include channel feedback indication information, and the channel feedback indication information may indicate the second device to feed back the channel measurement result.

For example, the first device may periodically send the trigger frame to the second device, or the first device may send the trigger frame to the second device at a specified time interval.

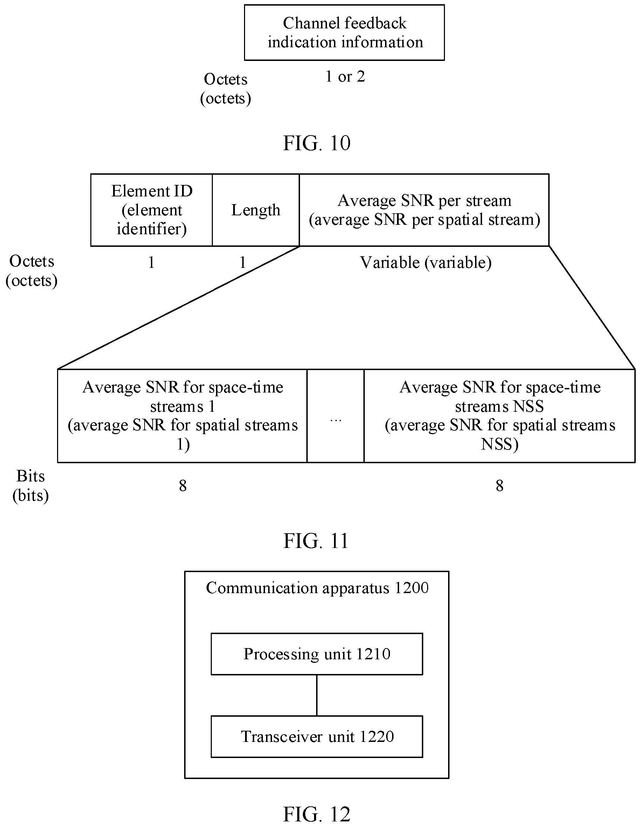

For example, the first device may carry the channel feedback indication information by using a newly added trigger frame type. For example, the trigger frame type may be a CMFP frame (channel measurement feedback (channel measurement feedback, CMF) polling trigger frame), and a trigger type is 9. In the CMFP frame, a trigger dependent common info (trigger dependent common information) field may not exist, and a format of a trigger dependent user info (trigger dependent user information) field may be shown in FIG. 10. The trigger dependent user info field may carry the channel feedback indication information (channel quality indicator (channel quality indicator, CQI) per stream presence indicator), to request the second device to feed back the channel measurement result. For example, a $p^{th}$ bit of the trigger dependent user info field being 1 indicates that feedback of channel quality information of a $p^{th}$ spatial stream is requested.

Correspondingly, after receiving the trigger frame, the second device sends the channel measurement result to the first device.

For example, after receiving the trigger frame, the second device may report the channel measurement result on a specified transmission resource at an interval of a short interframe space (short interframe space, SIFS).

For example, the second device may feed back the channel measurement result to the first device by using a newly added CMF element. For example, a format of the CMF element may be shown in FIG. 11. It is assumed that the channel quality information is an SNR. In this case, the channel quality information of each spatial stream is carried in an average SNR per stream field in the CMF element. For example, the average SNR per stream field carries an SNR of each spatial stream.

Manner 3: The second device sends the channel measurement result to the first device in the sounding phase.

Correspondingly, the first device receives the channel measurement result sent by the second device in the sounding phase.

The channel measurement result may include one of the foregoing described information.

For example, in the sounding phase, the second device may send the channel measurement result to the first device by using CQI feedback.

After receiving the channel measurement result sent by the second device, the first device determines the MCS pattern based on the channel measurement result.

Optionally, after receiving the channel measurement result, the first device may determine the channel quality information corresponding to each spatial stream. The first device determines the MCS pattern based on the channel quality information corresponding to each spatial stream.

For a manner in which the first device determines the MCS pattern based on the channel quality information, refer to the descriptions in the foregoing manner in which the second device performs the direct indication.

After determining the MCS pattern (the MCS pattern may be determined in either the direct indication manner or the indirect indication manner), the first device determines the plurality of candidate MCSs (or referred to as the MCS subtable) corresponding to the MCS pattern, and selects the target MCS from the plurality of candidate MCSs.

In a possible implementation, the first device may select the target MCS from the plurality of candidate MCSs according to a rate selection adaptive algorithm or a closed-loop method.

After determining the MCS pattern and the target MCS, the first device sends the first signaling to the second device. The first signaling includes the information about the MCS pattern and the information about the target MCS. For example, the information about the MCS pattern may be the element or the index of the MCS pattern, and the information about the target MCS may be the index of the target MCS.

Correspondingly, after receiving the first signaling, the second device decodes the first signaling based on the information about the MCS pattern and the information about the target MCS in the first signaling.

FIG. 12 is a diagram of a possible structure of a communication apparatus according to an embodiment of this application. These communication apparatuses may be configured to implement a function of the first device in the foregoing method embodiments, and therefore can also implement beneficial effect of the foregoing method embodiments. In embodiments of this application, the communication apparatus may be the first device, or may be a module (for example, a chip) used in the first device.

A communication apparatus 1200 shown in FIG. 12 includes a processing unit 1210 and a transceiver unit 1220. The communication apparatus 1200 is configured to implement a function of the first device in the foregoing method embodiments.

When the communication apparatus 1200 is configured to implement the function of the first device in the foregoing method embodiments, the processing unit 1210 is configured to generate first signaling, where the first signaling includes information about an MCS pattern and information about a target MCS, the MCS pattern corresponds to a plurality of candidate MCSs, the target MCS is determined from the plurality of candidate MCSs, and the target MCS includes a modulation scheme corresponding to each of a plurality of spatial streams between the first device and a second device. The transceiver unit 1220 is configured to send the first signaling to the second device.

In a possible implementation method, the MCS pattern indicates a constraint on the modulation scheme used for each of the plurality of spatial streams.

In a possible implementation method, the constraint includes at least one of the following:

order differences corresponding to modulation schemes used for different spatial streams in the plurality of spatial streams; and
a difference between coded bits of modulation schemes used for different spatial streams in the plurality of spatial streams.

In a possible implementation method, the MCS pattern includes a plurality of elements, each element corresponds to one of the plurality of spatial streams, and the element is determined based on a modulation scheme used for the corresponding spatial stream and a modulation scheme used for a reference spatial stream.

In a possible implementation method, the MCS pattern is selected from an MCS pattern set, and an MCS pattern included in the MCS pattern set matches a condition of a channel between the devices.

In a possible implementation method, the transceiver unit 1220 is further configured to receive pattern indication information sent by the second device, where the pattern indication information indicates the MCS pattern.

In a possible implementation method, the pattern indication information is carried in a field of an acknowledgment frame or a management frame.

In a possible implementation method, the pattern indication information includes an index or an element of the MCS pattern.

In a possible implementation method, the transceiver unit 1220 is further configured to receive a channel measurement result from the second device, where the channel measurement result indicates channel quality information of a part or all of the plurality of spatial streams.

The processing unit 1210 is further configured to determine the MCS pattern based on the channel measurement result.

In a possible implementation method, the channel measurement result includes channel quality information of each of the plurality of spatial streams; or

the channel measurement result includes the channel quality information of the part of the plurality of spatial streams; or

the channel measurement result includes channel quality information of the reference spatial stream in the plurality of spatial streams and information about a difference between channel quality information of different spatial streams in the plurality of spatial streams.

In a possible implementation method, the processing unit 1210 is configured to: determine, based on the channel measurement result, channel quality information corresponding to each spatial stream; for each spatial stream, determine, based on the channel quality information corresponding to the spatial stream and channel quality information corresponding to the reference spatial stream in the plurality of spatial streams, an element corresponding to the spatial stream, where the reference spatial stream is a spatial stream with a largest or smallest sequence number in the plurality of spatial streams, or a sequence number of the reference spatial stream is adjacent to a sequence number of the spatial stream; and determine the MCS pattern based on the determined element corresponding to each spatial stream.

In a possible implementation method, the transceiver unit 1220 is configured to: receive the channel measurement result sent by the second device by using the acknowledgment frame or the management frame; or send a trigger (Trigger) frame including channel feedback indication information to the second device, and receive the channel measurement result sent by the second device; or receive the channel measurement result sent by the second device in a sounding (sounding) phase.

In a possible implementation method, a SIG field of the first signaling includes a first field and a second field, the first field indicates the information about the MCS pattern, and the second field indicates the information about the target MCS.

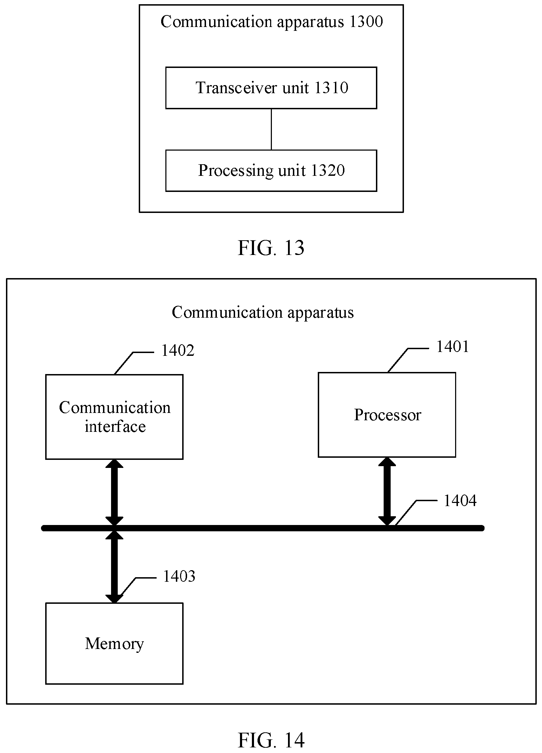

FIG. 13 is a diagram of a possible structure of a communication apparatus according to an embodiment of this application. These communication apparatuses may be configured to implement a function of the second device in the foregoing method embodiments, and therefore can also implement beneficial effect of the foregoing method embodiments. In embodiments of this application, the communication apparatus may be the second device, or may be a module (for example, a chip) used in the second device.

A communication apparatus 1300 shown in FIG. 13 includes a transceiver unit 1310 and a processing unit 1320. The communication apparatus 1300 is configured to implement a function of the second device in the foregoing method embodiments.

When the communication apparatus 1300 is configured to implement a function of the second device in the foregoing method embodiments, the transceiver unit 1310 is configured to receive first signaling sent by a first device, where the first signaling includes information about an MCS pattern and information about a target MCS, the MCS pattern corresponds to a plurality of candidate MCSs, the target MCS is determined from the plurality of candidate MCSs, and the target MCS includes a modulation scheme corresponding to each of a plurality of spatial streams between the first device and the second device. The processing unit 1320 is configured to decode the first signaling based on the information about the MCS pattern and the information about the target MCS.

In a possible implementation method, the MCS pattern indicates a constraint on the modulation scheme used for each of the plurality of spatial streams.

In a possible implementation method, the constraint includes at least one of the following:

order differences corresponding to modulation schemes used for different spatial streams in the plurality of spatial streams; and

a difference between coded bits of modulation schemes used for different spatial streams in the plurality of spatial streams.

In a possible implementation method, the MCS pattern includes a plurality of elements, each element corresponds to one of the plurality of spatial streams, and

the element is determined based on a modulation scheme used for the corresponding spatial stream and a modulation scheme used for a reference spatial stream.

In a possible implementation method, the MCS pattern is selected from an MCS pattern set, and an MCS pattern included in the MCS pattern set matches a condition of a channel between the devices.

In a possible implementation method, the processing unit 1320 is further configured to determine the MCS pattern based on channel quality information corresponding to each spatial stream.

The transceiver unit 1310 is further configured to send pattern indication information to the first device, where the pattern indication information indicates the MCS pattern.

In a possible implementation method, the pattern indication information is carried in a field of an acknowledgment frame or a management frame.

In a possible implementation method, the pattern indication information includes an index or an element of the MCS pattern.

In a possible implementation method, the processing unit 1320 is configured to: for each spatial stream, determine, based on the channel quality information corresponding to the spatial stream and channel quality information corresponding to the reference spatial stream in the plurality of spatial streams, an element corresponding to the spatial stream, where the reference spatial stream is a spatial stream with a largest or smallest sequence number in the plurality of spatial streams, or a sequence number of the reference spatial stream is adjacent to a sequence number of the spatial stream; and determine the MCS pattern based on the determined element corresponding to each spatial stream.

In a possible implementation method, the transceiver unit 1310 is further configured to send a channel measurement result to the first device, where the channel measurement result indicates channel quality information of a part of or all of the plurality of spatial streams, and the channel measurement result is used to determine the MCS pattern.

In a possible implementation method, the channel measurement result includes the channel quality information of each of the plurality of spatial streams; or

the channel measurement result includes the channel quality information of the part of the plurality of spatial streams; or

the channel measurement result includes channel quality information of the reference spatial stream in the plurality of spatial streams and information about a difference between channel quality information of different spatial streams in the plurality of spatial streams.

In a possible implementation method, the transceiver unit 1310 is configured to: send the channel measurement result to the first device by using the acknowledgment frame or the management frame; or send the channel measurement result to the first device after receiving a trigger frame that is sent by the first device and that includes channel feedback indication information; or send the channel measurement result to the first device in a sounding (sounding) phase.

In a possible implementation method, a SIG field of the first signaling includes a first field and a second field, the first field indicates the information about the MCS pattern, and the second field indicates the information about the target MCS.

Division into the units in embodiments of this application is an example and is merely logical function division, and may be other division in an actual implementation. In addition, functional units in embodiments of this application may be integrated into one processor, or may exist alone physically, or two or more units may be integrated into one unit. The integrated unit may be implemented in a form of hardware, or may be implemented in a form of a software functional module. It may be understood that for functions or implementations of the units in embodiments of this application, further refer to related descriptions in the method embodiments.

In a possible manner, a communication apparatus may be shown in FIG. 14. The apparatus may be the first device or a chip in the first device, or the apparatus may be the second device or a chip in the second device. The apparatus includes a processor 1401 and a communication interface 1402, and may further include a memory 1403.

The processor 1401 may be a CPU, a digital processing unit, or the like. The communication interface 1402 may be a transceiver, an interface circuit like a transceiver circuit, a transceiver chip, or the like. The apparatus further includes the memory 1403, configured to store a program executed by the processor 1401. The memory 1403 may be a nonvolatile memory, for example, a hard disk drive (hard disk drive, HDD) or a solid-state drive (solid-state drive, SSD), or may be a volatile memory (volatile memory), for example, a random-access memory (random-access memory, RAM). The memory 1403 is any other medium that can carry or store expected program code in a form of an instruction or a data structure and that can be accessed by a computer, but is not limited thereto.

The processor 1401 is configured to execute the program code stored in the memory 1403, and is specifically configured to perform an action of the processing unit 1210 or the processing unit 1320. The communication interface 1402 is specifically configured to perform an action of the transceiver unit 1220 or the transceiver unit 1310. Details are not described herein again in this application.

A specific connection medium between the communication interface 1402, the processor 1401, and the memory 1403 is not limited in embodiments of this application. In this embodiment of this application, the memory 1403, the processor 1401, and the communication interface 1402 are connected through a bus 1404 in FIG. 14, and the bus is represented by a thick line in FIG. 14. A connection manner between other components is schematically described, and is not limited thereto. The bus may be classified into an address bus, a data bus, a control bus, and the like. For ease of representation, only one bold line is used to represent the bus in FIG. 14, but this does not mean that there is only one bus or only one type of bus.

An embodiment of this application further provides a computer-readable storage medium, configured to store computer software instructions that need to be executed by the processor. The computer software instructions include a program that needs to be executed by the processor.

An embodiment of this application further provides a computer program product, including a computer program that needs to be executed by the processor.

A person skilled in the art should understand that embodiments of this application may be provided as a method, a system, or a computer program product. Therefore, this application may use a form of hardware-only embodiments, software-only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that the instructions executed by the computer or the processor of another programmable data processing device generate an apparatus for implementing a specific function in one or more processes in the flowcharts and/or in one or more blocks in the block diagrams.

These computer program instructions may alternatively be stored in a computer-readable memory that can indicate the computer or the another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may be loaded onto the computer or the another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

It is clear that a person skilled in the art can make various modifications and variations to this application without departing from the spirit and scope of this application. This application is intended to cover these modifications and variations of this application provided that they fall within the scope of protection defined by the claims of this application and their equivalent technologies.

## Claims

1.  A communication method, wherein the method comprises:

    generating, by a first device, first signaling, wherein the first signaling comprises information about a modulation and coding scheme MCS pattern and information about a target MCS, the MCS pattern corresponds to a plurality of candidate MCSs, the target MCS is determined from the plurality of candidate MCSs, and the target MCS comprises a modulation scheme corresponding to each of a plurality of spatial streams between the first device and a second device; and

sending, by the first device, the first signaling to the second device.

2. The method according to claim 1, wherein the MCS pattern indicates a constraint on the modulation scheme used for each of the plurality of spatial streams.

3. The method according to claim 2, wherein the constraint comprises at least one of the following:

order differences corresponding to modulation schemes used for different spatial streams in the plurality of spatial streams; and
a difference between coded bits of modulation schemes used for different spatial streams in the plurality of spatial streams.

4. The method according to any one of claims 1 to 3, wherein the MCS pattern comprises a plurality of elements, and each element corresponds to one of the plurality of spatial streams; and
the element is determined based on a modulation scheme used for the corresponding spatial stream and a modulation scheme used for a reference spatial stream.

5. The method according to any one of claims 1 to 4, wherein the MCS pattern is selected from an MCS pattern set, and an MCS pattern comprised in the MCS pattern set matches a condition of a channel between the devices.

6. The method according to any one of claims 1 to 5, wherein the method further comprises:
receiving, by the first device, pattern indication information sent by the second device, wherein the pattern indication information indicates the MCS pattern.

7. The method according to claim 6, wherein the pattern indication information is carried in a field of an acknowledgment frame or a management frame.

8. The method according to claim 6 or 7, wherein the pattern indication information comprises an index or an element of the MCS pattern.

9. The method according to claim 4, wherein the method further comprises:

receiving, by the first device, a channel measurement result from the second device, wherein the channel measurement result indicates channel quality information of a part or all of the plurality of spatial streams; and
determining, by the first device, the MCS pattern based on the channel measurement result.

10. The method according to any one of claims 6 to 9, wherein the channel measurement result comprises channel quality information of each of the plurality of spatial streams; or

the channel measurement result comprises the channel quality information of the part of the plurality of spatial streams; or
the channel measurement result comprises channel quality information of the reference spatial stream in the plurality of spatial streams and information about a difference between channel quality information of different spatial streams in the plurality of spatial streams.

11. The method according to claim 9 or 10, wherein determining, by the first device, the MCS pattern based on the channel measurement result comprises:

determining, by the first device based on the channel measurement result, the channel quality information corresponding to each spatial stream;
for each spatial stream, determining, by the first device based on the channel quality information corresponding to the spatial stream and the channel quality information corresponding to the reference spatial stream in the plurality of spatial streams, an element corresponding to the spatial stream, wherein the reference spatial stream is a spatial stream with a largest or smallest sequence number in the plurality of spatial streams, or a sequence number of the reference spatial stream is adjacent to a sequence number of the spatial stream; and
determining, by the first device, the MCS pattern based on the determined element corresponding to each spatial stream.

12. The method according to any one of claims 9 to 11, wherein receiving, by the first device, the channel measurement result from the second device comprises:

receiving, by the first device, the channel measurement result sent by the second device by using the acknowledgment frame or the management frame; or
sending, by the first device to the second device, a trigger (Trigger) frame comprising channel feedback indication information, and receiving the channel measurement result sent by the second device; or
receiving, by the first device, the channel measurement result sent by the second device in a sounding (sounding) phase.

13. The method according to any one of claims 1 to 12, wherein a SIG field of the first signaling comprises a first field and a second field, the first field indicates the information about the MCS pattern, and the second field indicates the information about the target MCS.

14. A communication method, wherein the method comprises:

receiving, by a second device, first signaling sent by a first device, wherein the first signaling comprises information about a modulation and coding scheme MCS pattern and information about a target MCS, the MCS pattern corresponds to a plurality of candidate MCSs, the target MCS is determined from the plurality of candidate MCSs, and the target MCS comprises a modulation scheme corresponding to each of a plurality of spatial streams between the first device and the second device; and
decoding, by the second device, the first signaling based on the information about the MCS pattern and the information about the target MCS.

15. The method according to claim 14, wherein the MCS pattern indicates a constraint on the modulation scheme used for each of the plurality of spatial streams.

16. The method according to claim 15, wherein the constraint comprises at least one of the following:

order differences corresponding to modulation schemes used for different spatial streams in the plurality of spatial streams; and
a difference between coded bits of modulation schemes used for different spatial streams in the plurality of spatial streams.

17. The method according to any one of claims 14 to 16, wherein the MCS pattern comprises a plurality of elements, and each element corresponds to one of the plurality of spatial streams; and
the element is determined based on a modulation scheme used for the corresponding spatial stream and a modulation scheme used for a reference spatial stream.

18. The method according to any one of claims 14 to 17, wherein the MCS pattern is selected from an MCS pattern set, and an MCS pattern comprised in the MCS pattern set matches a condition of a channel between the devices.

19. The method according to claim 17, wherein the method further comprises:

determining, by the second device, the MCS pattern based on channel quality information corresponding to each spatial stream; and
sending, by the second device, pattern indication information to the first device, wherein the pattern indication information indicates the MCS pattern.

20. The method according to claim 19, wherein the pattern indication information is carried in a field of an acknowledgment frame or a management frame.

21. The method according to claim 19 or 20, wherein the pattern indication information comprises an index or an element of the MCS pattern.

22. The method according to any one of claims 19 to 21, wherein determining, by the second device, the MCS pattern based on the channel quality information corresponding to each spatial stream comprises:

for each spatial stream, determining, by the second device based on the channel quality information corresponding to the spatial stream and channel quality information corresponding to the reference spatial stream in the plurality of spatial streams, an element corresponding to the spatial stream, wherein the reference spatial stream is a spatial stream with a largest or smallest sequence number in the plurality of spatial streams, or a sequence number of the reference spatial stream is adjacent to a sequence number of the spatial stream; and determining the MCS pattern based on the determined element corresponding to each spatial stream.

23. The method according to any one of claims 14 to 18, wherein the method further comprises:
sending, by the second device, a channel measurement result to the first device, wherein the channel measurement result indicates channel quality information of a part of or all of the plurality of spatial streams, and the channel measurement result is used to determine the MCS pattern.

24. The method according to claim 23, wherein the channel measurement result comprises the channel quality information of each of the plurality of spatial streams; or

the channel measurement result comprises the channel quality information of the part of the plurality of spatial streams; or
the channel measurement result comprises channel quality information of the reference spatial stream in the plurality of spatial streams and information about a difference between channel quality information of different spatial streams in the plurality of spatial streams.

25. The method according to claim 23 or 24, wherein sending, by the second device, the channel measurement result to the first device comprises:

sending, by the second device, the channel measurement result to the first device by using the acknowledgment frame or the management frame; or
sending, by the second device, the channel measurement result to the first device after receiving a trigger frame that is sent by the first device and that comprises channel feedback indication information; or
sending, by the second device, the channel measurement result to the first device in a sounding (sounding) phase.

26. The method according to any one of claims 14 to 25, wherein a SIG field of the first signaling comprises a first field and a second field, the first field indicates the information about the MCS pattern, and the second field indicates the information about the target MCS.

27. A communication apparatus, comprising a processor and an interface circuit, wherein the processor is configured to communicate with another apparatus through the interface circuit, and perform the method according to any one of claims 1 to 13 or the method according to any one of claims 14 to 26.

28. A computer program product, wherein the computer program product comprises instructions, and when the instructions are run on a processor, the processor is enabled to perform the method according to any one of claims 1 to 13 or the method according to any one of claims 14 to 26.

29. A computer-readable storage medium, wherein the storage medium stores a computer program or instructions, and when the computer program or the instructions are executed by a communication apparatus, the method according to any one of claims 1 to 13 or the method according to any one of claims 14 to 26 is implemented.

30. A communication system, comprising a first device configured to perform the method according to any one of claims 1 to 13, and a second device configured to perform the method according to any one of claims 14 to 26.

Access point (AP)

Station 1
(STA 1)

Station 2
(STA 2)

FIG. 1

| MCS subtable with a pattern of 12 | | | | | | | | | | | | |
|---|---|---|---|---|---|---|---|---|---|---|---|---|
| MCS index | Modulation scheme | | | | Code rate ($R_U$) | $N_{BPSCS,U}$ | $N_{SD,U}$ | $N_{CBPS,U}$ | $N_{DBPS,U}$ | Data rate (Mb/s) | | |
| | Spatial stream 1 | Spatial stream 2 | Spatial stream 3 | Spatial stream 4 | | | | | | 0.8 µs GI | 1.6 µs GI | 3.2 µs GI |
| 0 | 16-QAM | 16-QAM | QPSK | BPSK | 1/2 | 11 | 24 | 264 | 132 | 9.7 | 9.2 | 8.3 |
| 1 | 64-QAM | 64-QAM | 16-QAM | QPSK | 1/2 | 18 | 24 | 432 | 216 | 15.9 | 15.0 | 13.5 |
| 2 | 64-QAM | 64-QAM | 16-QAM | QPSK | 3/4 | 18 | 24 | 432 | 324 | 23.8 | 22.5 | 20.3 |
| 3 | 256-QAM | 256-QAM | 64-QAM | 16-QAM | 1/2 | 26 | 24 | 624 | 312 | 22.9 | 21.7 | 19.5 |
| 4 | 256-QAM | 256-QAM | 64-QAM | 16-QAM | 3/4 | 26 | 24 | 624 | 468 | 34.4 | 32.5 | 29.3 |
| 5 | 1024-QAM | 1024-QAM | 256-QAM | 64-QAM | 2/3 | 34 | 24 | 816 | 544 | 40.0 | 37.8 | 34.0 |
| 6 | 1024-QAM | 1024-QAM | 256-QAM | 64-QAM | 3/4 | 34 | 24 | 816 | 612 | 45.0 | 42.5 | 38.3 |
| 7 | 1024-QAM | 1024-QAM | 256-QAM | 64-QAM | 5/6 | 34 | 24 | 816 | 680 | 50.0 | 47.2 | 42.5 |
| 8 | 4096-QAM | 4096-QAM | 1024-QAM | 256-QAM | 3/4 | 42 | 24 | 1008 | 756 | 55.6 | 52.5 | 47.3 |
| 9 | 4096-QAM | 4096-QAM | 1024-QAM | 256-QAM | 5/6 | 42 | 24 | 1008 | 840 | 61.8 | 58.3 | 52.5 |

FIG. 2

| MCS subtable with a pattern of 17 | | | | | | | | | | | | |
|---|---|---|---|---|---|---|---|---|---|---|---|---|
| MCS index | Modulation scheme | | | | Code rate $(R_U)$ | $N_{BPSCS,U}$ | $N_{SD,U}$ | $N_{CBPS,U}$ | $N_{DBPS,U}$ | Data rate (Mb/s) | | |
| | Spatial stream 1 | Spatial stream 2 | Spatial stream 3 | Spatial stream 4 | | | | | | 0.8 µs GI | 1.6 µs GI | 3.2 µs GI |
| 0 | 256-QAM | 256-QAM | 64-QAM | BPSK | 1/2 | 23 | 24 | 552 | 276 | 20.3 | 19.2 | 17.3 |
| 1 | 1024-QAM | 1024-QAM | 256-QAM | QPSK | 1/2 | 30 | 24 | 720 | 360 | 26.5 | 25.0 | 22.5 |
| 2 | 1024-QAM | 1024-QAM | 256-QAM | QPSK | 3/4 | 30 | 24 | 720 | 540 | 39.7 | 37.5 | 33.8 |
| 3 | 4096-QAM | 4096-QAM | 1024-QAM | 16-QAM | 1/2 | 38 | 24 | 912 | 456 | 33.5 | 31.7 | 28.5 |
| 4 | 4096-QAM | 4096-QAM | 1024-QAM | 16-QAM | 3/4 | 38 | 24 | 912 | 684 | 50.3 | 47.5 | 42.8 |
| 5 | 1024-QAM | 1024-QAM | 64-QAM | BPSK | 1/2 | 27 | 24 | 648 | 324 | 23.8 | 22.5 | 20.3 |
| 6 | 4096-QAM | 4096-QAM | 256-QAM | QPSK | 1/2 | 34 | 24 | 816 | 408 | 30.0 | 28.3 | 25.5 |
| 7 | 4096-QAM | 4096-QAM | 256-QAM | QPSK | 3/4 | 34 | 24 | 816 | 612 | 45.0 | 42.5 | 38.3 |
| 8 | 1024-QAM | 1024-QAM | 256-QAM | BPSK | 1/2 | 29 | 24 | 696 | 348 | 25.6 | 24.2 | 21.8 |
| 9 | 4096-QAM | 4096-QAM | 1024-QAM | QPSK | 1/2 | 36 | 24 | 864 | 432 | 31.8 | 30.0 | 27.0 |
| 10 | 4096-QAM | 4096-QAM | 1024-QAM | QPSK | 3/4 | 36 | 25 | 900 | 675 | 49.6 | 46.9 | 42.2 |
| 11 | 4096-QAM | 4096-QAM | 64-QAM | BPSK | 1/2 | 31 | 26 | 806 | 403 | 29.6 | 28.0 | 25.2 |
| 12 | 4096-QAM | 4096-QAM | 256-QAM | BPSK | 1/2 | 33 | 27 | 891 | 445 | 32.7 | 30.9 | 27.8 |
| 13 | 4096-QAM | 4096-QAM | 1024-QAM | BPSK | 1/2 | 35 | 28 | 980 | 490 | 36.0 | 34.0 | 30.6 |

FIG. 3

First device

Second device

Step 400: Generate
first signaling

Step 401: Send the first signaling

FIG. 4

| Block ack starting sequence control (block acknowledgment starting sequence control) | Block ack bitmap (block acknowledgment bitmap) | MCS pattern (MCS pattern) |
|---|---|---|

| Octets (octets) | 2 | 8 or 32 | 1 |
|---|---|---|---|

FIG. 5

| Block ack starting sequence control (block acknowledgment starting sequence control) | Block ack bitmap (block acknowledgment bitmap) | Average SNR for space-time streams (average SNR for spatial streams) |
|---|---|---|

Octets
(octets)

2

8 or 32

NSS

| Average SNR for space-time streams 1 (average SNR for spatial streams 1) | ... | Average SNR for space-time streams NSS (average SNR for spatial streams NSS) |
|---|---|---|

Bits
(bits)

8

8

FIG. 6

EP 4 761 152 A1

| Block ack starting sequence control (block acknowledgment starting sequence control) | Block ack bitmap (block acknowledgment bitmap) | Average SNR for space-time streams (average SNR for spatial streams) |
| --- | --- | --- |

Octets (octets)    2      8 or 32      Variable (variable)

| Average SNR for space-time streams 1 (average SNR for spatial streams 1) | ... | Average SNR for space-time streams NSS (average SNR for spatialstreams NSS) | Reserved (reserved) |
| --- | --- | --- | --- |

Bits (bits)    6     6     6

FIG. 7

| Block ack starting sequence control (block acknowledgment starting sequence control) | Block ack bitmap (block acknowledgment bitmap) | Average SNR presence indicator (average SNR presence indicator) | Average SNR for space-time streams (average SNR for spatial streams) |
|---|---|---|---|
| 2 | 8 or 32 | 1 or 2 | Variable (variable) |

Octets (octets)

| Average SNR for space-time streams 1 (average SNR for spatial streams 1) (optional) | ... | Average SNR for space-time streams NSS (average SNR for spatial streams NSS) (optional) |
|---|---|---|
| 8 | | 8 |

Bits (bits)

FIG. 8

EP 4 761 152 A1

| Block ack starting sequence control (block acknowledgment starting sequence control) | Block ack bitmap (block acknowledgment bitmap) | Average SNR difference for space-time streams (average SNR difference for spatial streams) |
|---|---|---|

Octets (octets)  |  2  |  8 or 32  |  Variable (variable)

| Average SNR for space-time streams 1 (average SNR for spatial streams 1) | Average SNR difference between space-time streams 1 and 2 (difference between an SNR for spatial streams 1 and an average SNR for spatial streams 2) | ... | Average SNR difference between space-time streams NSS–1 and NSS (difference between an SNR for spatial streams NSS–1 and an average SNR for spatial streams NSS) | Reserved (reserved) |
|---|---|---|---|---|

Bits (bits)  |  n_1  |  n_2  |  n_NSS  |  Variable (variable)

FIG. 9

| | Channel feedback indication information |
|---|---|

Octets (octets)      1 or 2

## FIG. 10

| Element ID (element identifier) | Length | Average SNR per stream (average SNR per spatial stream) |
|---|---|---|

Octets (octets)    1      1      Variable (variable)

| Average SNR for space-time streams 1 (average SNR for spatial streams 1) | ... | Average SNR for space-time streams NSS (average SNR for spatial streams NSS) |
|---|---|---|

Bits (bits)      8          8

## FIG. 11

| Communication apparatus 1200 |
|---|
| Processing unit 1210 |
| Transceiver unit 1220 |

## FIG. 12

Communication apparatus 1300

Transceiver unit 1310

Processing unit 1320

FIG. 13

Communication apparatus

1402

Communication interface

1401

Processor

1404

1403

Memory

FIG. 14

## INTERNATIONAL SEARCH REPORT

| International application No. |
| --- |
| **PCT/CN2024/110153** |

| A. | CLASSIFICATION OF SUBJECT MATTER |
| --- | --- |

H04L 1/00(2006.01)i

According to International Patent Classification (IPC) or to both national classification and IPC

| B. | FIELDS SEARCHED |
| --- | --- |

Minimum documentation searched (classification system followed by classification symbols)

IPC: H04L H04W

Documentation searched other than minimum documentation to the extent that such documents are included in the fields searched

Electronic data base consulted during the international search (name of data base and, where practicable, search terms used)

CNTXT, ENTXTC, WPABSC, DWPI, 3GPP, IEEE: 调制, 编码, 空间流, 模式, 候选, 目标, 目的, 约束, 阶数, 比特, 位, 差, 多输入多输出, modulation and coding scheme, MCS, spatial stream, SS, pattern, mode, candidate, target, constraint, order, bit, differen+, multiple-input multiple-output, MIMO

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | US 2018020374 A1 (QUALCOMM INC.) 18 January 2018 (2018-01-18) description, paragraphs [0056]-[0090], and figures 4-10 | 1, 5-8, 10-14, 18, 23-30 |
| Y | US 2018020374 A1 (QUALCOMM INC.) 18 January 2018 (2018-01-18) description, paragraphs [0056]-[0090], and figures 4-10 | 2-4, 9, 15-17, 19-22 |
| Y | CN 109716687 A (LG ELECTRONICS INC.) 03 May 2019 (2019-05-03) description, paragraphs [0036]-[0162] | 2-4, 9, 15-17, 19-22 |
| A | CN 116195288 A (HUAWEI TECHNOLOGIES CO., LTD.) 30 May 2023 (2023-05-30) entire document | 1-30 |
| A | NOKIA NETWORKS. "Mode Detection and Mode Adaptation in Downlink MIMO" *3GPP TSG GERAN#69, GP-160119*, 19 February 2016 (2016-02-19), entire document | 1-30 |

| ☐ Further documents are listed in the continuation of Box C. | ☑ See patent family annex. |
| --- | --- |

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **14 October 2024** | **18 October 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/110153**

| Patent document cited in search report | | | Publication date (day/month/year) | Patent family member(s) | | | Publication date (day/month/year) |
|---|---|---|---|---|---|---|---|
| US | 2018020374 | A1 | 18 January 2018 | TW | 201804768 | A | 01 February 2018 |
| | | | | WO | 2018017432 | A1 | 25 January 2018 |
| CN | 109716687 | A | 03 May 2019 | US | 2019215205 | A1 | 11 July 2019 |
| | | | | KR | 20190029736 | A | 20 March 2019 |
| | | | | EP | 3499762 | A1 | 19 June 2019 |
| | | | | WO | 2018048284 | A1 | 15 March 2018 |
| | | | | CN | 113595682 | A | 02 November 2021 |
| CN | 116195288 | A | 30 May 2023 | EP | 4210411 | A1 | 12 July 2023 |
| | | | | US | 2023239069 | A1 | 27 July 2023 |
| | | | | WO | 2022067817 | A1 | 07 April 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311141500